# EUROPEAN PATENT SPECIFICATION

(11) **EP 0 597 826 B1**
(45) Date of publication and mention of the grant of the patent: **23.05.2001**
(21) Application number: 94102428.3
(22) Date of filing: 04.08.1988
(51) Int. Cl.: G11B 7/24

(54) **Data recording medium**
Datenaufzeichnungsträger
Support d'enregistrement de données

(30) Priority: 05.08.1987 JP 19442987; 06.08.1987 JP 19518687; 20.05.1988 JP 12368488
(43) Date of publication of application: 18.05.1994
(62) Divisional of application: 88112724.5
(73) Proprietor: CANON KABUSHIKI KAISHA, Tokyo (JP)
(72) Inventor: Miyazaki, Takeshi, Kanagawa-ken (JP); Oguchi, Yoshihiro, Yokohama-shi, Kanagawa-ken (JP); Ohnishi, Toshikazu, Tokyo, (JP); Yoshinaga, Kazuo, Machida-shi, Tokyo (JP); Kurabayashi, Yutaka, Yokohama-shi, Kanagawa-ken (JP); Santoh, Tsuyoshi, Yokohama-shi, Kanagawa-ken (JP)
(74) Representative: Tiedtke, Harro, Dipl.-Ing.

(56) References cited:
- EP-A- 0 140 133
- EP-A- 0 242 278
- US-A- 4 320 489
- PATENT ABSTRACTS OF JAPAN vol. 10 no. 21 (M-449) ,28 January 1986 & JP-A-60 179294 (TDK KK)
- PATENT ABSTRACTS OF JAPAN vol. 11 no. 389 (P-648) ,19 December 1987 & JP-A-62 154340 (NEC CORP)
- PATENT ABSTRACTS OF JAPAN vol. 9 no. 172 (M-397) ,17 July 1985 & JP-A-60 044390 (TDK KK)

## Description

### FIELD OF THE INVENTION AND RELATED ART

The present invention relates to a data recording medium having a recording layer comprising a polymer liquid crystal. More specifically, the present invention relates to a data recording medium having a recording layer comprising a polymer liquid crystal, suitable for use in an optical recording and reproduction apparatus and in the form of a disk, a tape and a card format.

In recent years, research and development of rewritable recording media for use as a large capacity memory, a display, etc., have been extensively made. One of such media has been known to utilize phase transition of a liquid crystal.

For example, a layer of aligned liquid crystal sandwiched between a pair of transparent electrodes or appropriate substrates is optically transparent. If the liquid crystal layer is raised to a temperature above a phase transition temperature (of nematic phase → isotropic phase, or smectic phase → nematic phase) and then suddenly cooled, the liquid crystal layer is not restored to the original transparent state but assumes a light-scattering state. Thus, the resultant contrast can be used for recording and readout. After the writing, the restoration of the liquid crystal phase such as smectic phase is caused by applying an electric field between the electrodes or by heating and gradually cooling the recording medium, thereby to effect erasure. Further, heating with or without voltage application can be used for erasure.

On the other hand, a polymer liquid crystal having a glass transition temperature and an excellent memory characteristic has been recently calling attention. Ordinally, for the heating of a polymer liquid crystal layer, a semiconductor laser which is compact and inexpensive has been frequently used. The oscillation wavelength available by the laser is generally 650 nm or longer, and the laser light power is smaller than that of a gas laser, such as argon laser or helium-neon laser. As an ordinary liquid crystal does not show an absorptivity in such a near infrared region, it has been proposed to incorporate a light-absorbing dye in a liquid crystal layer.

However, a dye showing an absorptivity in the near infrared region is generally not sufficiently thermally stable in a liquid crystal medium, so that it is partially decomposed during repetition of writing-erasure until the recording medium fails to provide a sufficient contrast.

In view of the above problem, it has been proposed to cause light absorption by providing a light absorbing layer of phthalocyanine which is a very stable pigment or dispersing phthalocyanine in a polymer liquid crystal (Japanese Laid-Open Patent Application JP-A (Tokkai) Sho 60-179294).

However, the provision of a light-absorbing layer or dispersion of a pigment in the recording layer causes a lowering in efficiency of light absorption for heat generation. The dispersion for recording at minute pits on the order of 1 µm causes undesirable lowering in S/N ratio or scattering by the particles.

As a solution to the above problems, it has been tried to dissolve a stable pigment such as phthalocyanine and reported to dissolve such a pigment in a low-molecular weight liquid crystal, thus showing a possibility of improving the durability of an optical recording system using a low-molecular weight liquid crystal (Japanese Laid-Open Patent Application JP-A (Tokkai) Sho 62-25191).

In addition, while not with respect to a recording medium using a low-molecular weight or polymer liquid crystal, a chemical combination of a polymer and a pigment has been reported as a method for solubilizing a stable pigment (JP-A (Tokkai) Sho 61-232448).

However, in the above-mentioned rewritable data recording media utilizing optical absorption other than one using a recording layer of a polymer liquid crystal and structural fixation by utilizing its phase transition, melting point or glass transition point, the recording layer per se is liable to be degraded, and the recording, reproduction and erasure are liable to be unstable chemically or physically. Further, the contrast in the recording state is low so that the detection and reproduction system may become complicated.

In contrast thereto, a data recording medium having a recording layer comprising a polymer liquid crystal shows an excellent stability and a high contrast, but it requires that a light absorbent is dissolved in a polymer liquid crystal at a substantially molecular level in as large a quantity as possible.

However, colorants or pigments conventionally dissolved in a polymer liquid crystal either have a low solubility in the polymer liquid crystal or remarkably lower the melting point or glass transition point of the resultant liquid crystal phase even if it is dissolved. Further, the liquid crystal phase is liable to be unstabilized or caused to have a lower clearing point so as to have the liquid crystal phase disappear frequently.

The EP-A-0 140 133 describes polymers containing groups which are able to produce discoatic liquid crystals. In specific examples of this document, phthalocyanine is used.

For the above problems, it has been difficult to compatibly provide both a high light-absorption efficiency and a stable recording state by the addition of a light absorbent.

### SUMMARY OF THE INVENTION

Accordingly, an object of the present invention is to provide a data recording medium having a recording layer which comprises a polymer liquid crystal and an additive showing an absorptivity to wavelengths in the near infrared region and stably dissolved in the polymer liquid crystal and is free from degradation on repetition of a writing-erasure cycle.

Another object of the present invention is to provide a data recording medium having a recording layer comprising a polymer liquid crystal, which is excellent in reversibility, capable of recording a large optical density difference, capable of essentially stable recording through utilization of the phase transition, melting point or glass transition point of the polymer liquid crystal, and yet capable of realizing stable and sufficient light-absorptivity without causing a lowering in glass transition point or unstabilization of the liquid crystal phase.

According to the present invention, there is provided a data recording medium having a recording layer which comprises a polymer liquid crystal and a colorant being soluble in said polymer liquid crystal and being naphthalocyanine which is inclusively represented by the following Formula (I) : 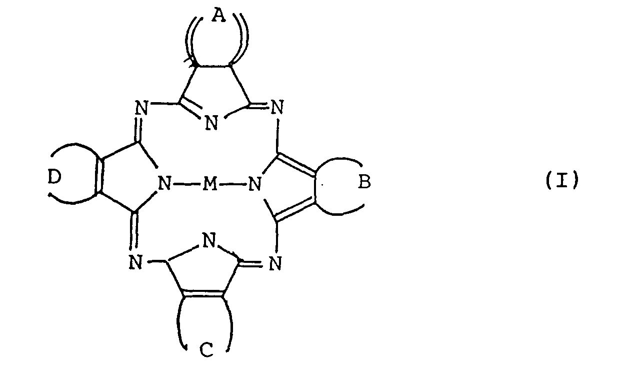 wherein the symbols A, B, C and D respectively denote the following divalent group: 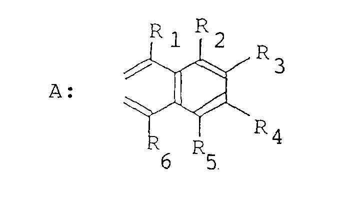 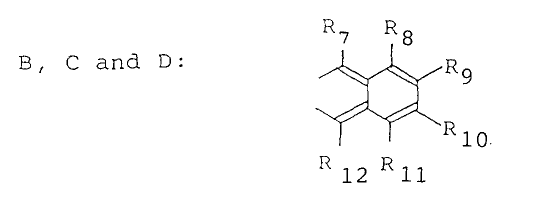 wherein R₁ - R₁₂ respectively denote a hydrogen group, a linear or branched alkyl, alkoxy or alkenyl group having 4 to 20 carbon atoms, or a group selected from the following: -SiQ₁Q₂Q₃, -SQ₄, -COQ₅, COOQ₆, and -NQ₇Q₈, wherein Q₁ - Q₈ respectively denote a hydrogen atom, or a linear or branched alkyl or alkenyl group having 1 to 20 carbon atoms;
M denotes Ge, Sn, transition metal, Al, Ga, In, alkaline earth metal, lanthanide element or actinide element, or an oxide, halogenide or alkoxide thereof.

Preferably, said colorant is a naphthalocyanine represented by the following Formula (II): 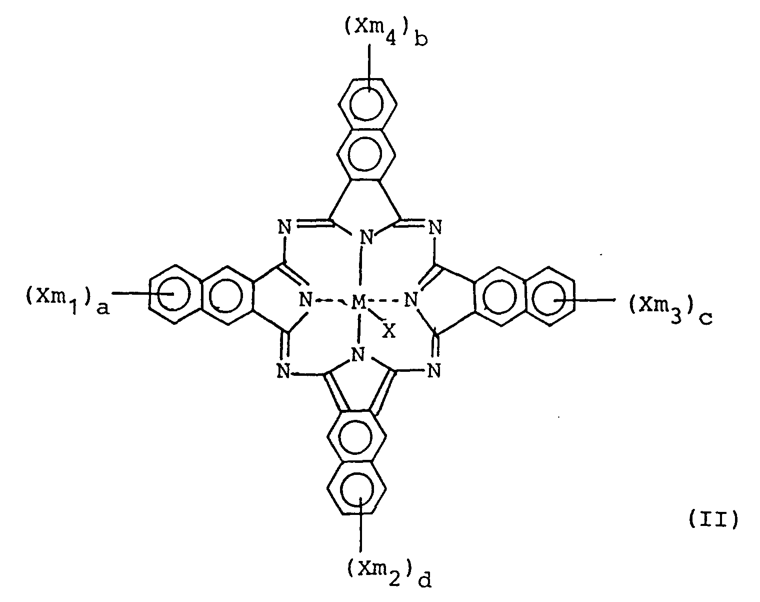
wherein M denotes M denotes Ge, Sn, transition metal, Al, Ga, In, alkaline earth metal, lanthanide element or actinide element;
X denotes halogen atom, alkyl group, carboxyl group, alkoxy group, ether group or alkenyl group;
Xm₁ - Xm₄ respectively denote halogen atom, alkyl group, sulfomoyl group, ether group or alkenyl group;
a - d are respectively a number of 0 to 4 satisfying the relationship of a+b+c+d ≥ 1.

These and other objects, features and advantages of the present invention will become more apparent upon a consideration of the following description of the preferred embodiments of the present invention taken in conjunction with the accompanying drawings.

### BRIEF DESCRIPTION OF THE DRAWINGS

Figures 1 and 2 are respectively a schematic sectional view showing an embodiment of the data recording medium of the present invention;
Figure 3 is an illustration of an apparatus system for recording, reproduction and erasure on the data recording medium of the present invention; and
Figure 4 is a phase diagram of a polymer liquid crystal composition used in the present invention.

### DESCRIPTION OF THE PREFERRED EMBODIMENTS

In addition to the aforementioned soluble colorant, the recording layer may further comprise a metal chelate being different from the specified colorant.

Examples of such a metal chelate compound may include those represented by the following formulas (1) - (17) : 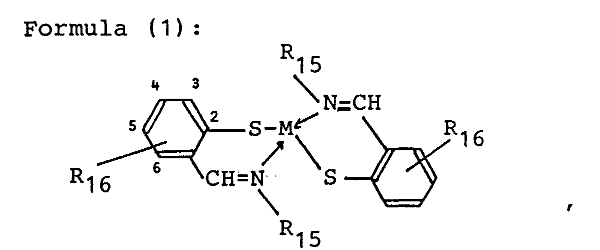 wherein R₁₅ denotes a hydrogen atom, hydroxyl group or alkyl group capable of being connected with another R₁₅; R₁₆ denotes alkyl group, halogen atom, hydrogen atom, nitro group, or benzo condensed group; and M denotes a center metal of Cu, Ni, Co or Pd. 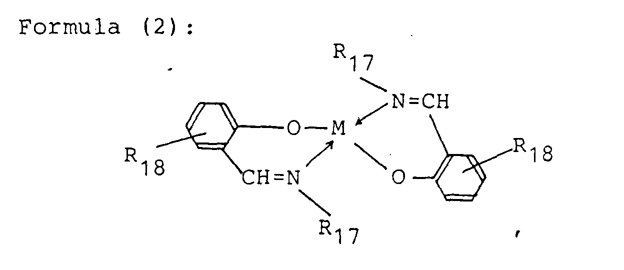 wherein R₁₇ denotes a hydrogen atom, hydroxyl group, alkyl group or aryl group capable of being connected with another R₁₇; R₁₈ denotes a halogen atom, alkyl group, nitro group or condensed benzo group; and M denotes Cu, Ni, Co or Pd. 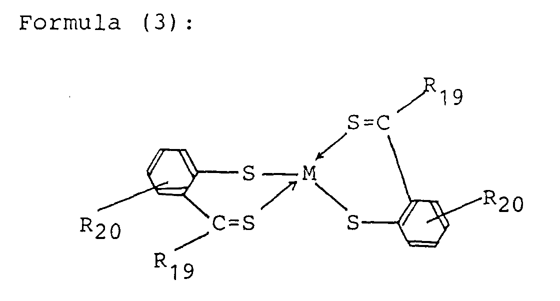 wherein R₁₉ denotes an alkyl group or aryl group; R₂₀ denotes a hydrogen atom, halogen atom, alkyl group, aryl group, nitro group or condensed benzo group; and M denotes Cu, Ni or Pd. 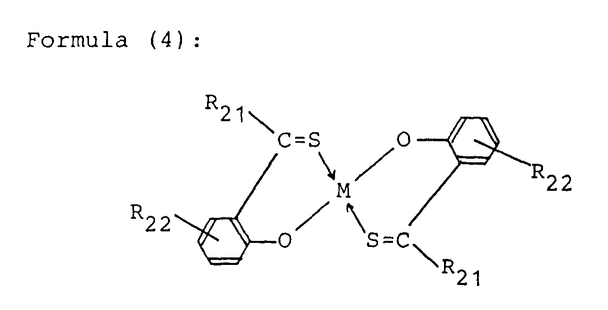 wherein R₂₁ denotes an alkyl group or aryl group; R₂₂ denotes a hydrogen atom, halogen atom, alkyl group or condensed benzo group; and M denotes Cu, Ni or Pd. 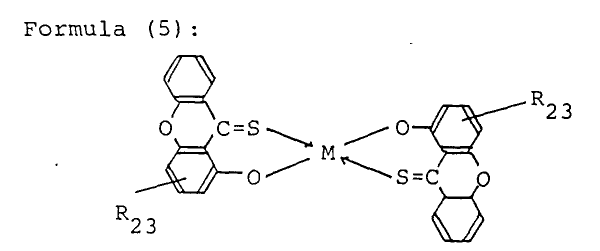 wherein R₂₃ denotes a hydrogen atom or alkyl group; and M denotes Cu or Ni. 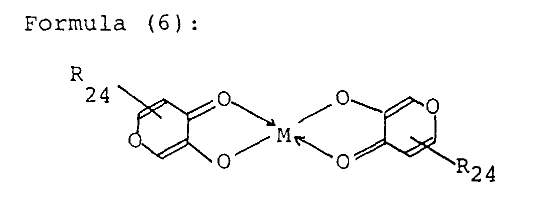 wherein R₂₄ denotes a hydrogen atom or alkyl group; and M denotes Cu, Ni, Co or Mn. 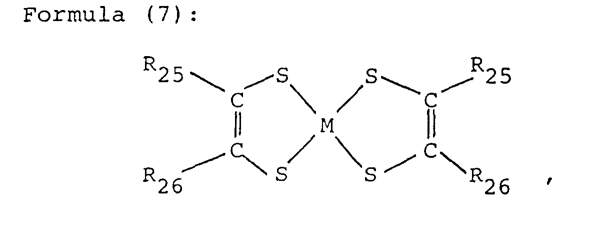 wherein R₂₅ and R₂₆ respectively denote a substituted or non-substituted alkyl group, acyl group or aryl group and R₂₅ and R₂₆ are capable of forming an aromatic ring in combination; M denotes Cu, Ni, Co or Pd which can have a charge and a counter ion. 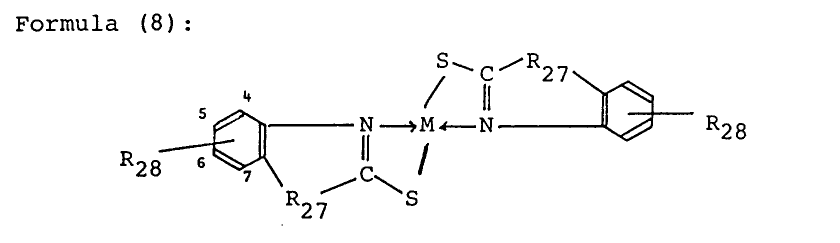 wherein R₂₇ denotes a sulfur atom, substituted or non-substituted amino group, oxygen atom or thioketone group; R₂₈ denotes a hydrogen atom, alkyl group, halogen atom or amino group; and M denotes Zn, Cu or Ni. 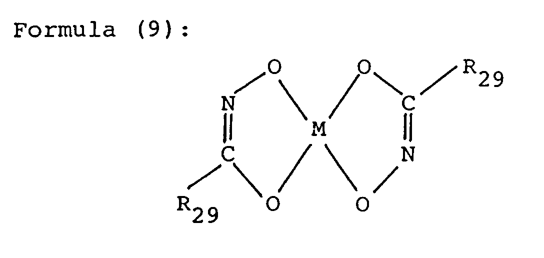 wherein R₂₉ denotes an alkyl group, aryl group or styryl group; and M denotes Cu, Ni or Co. 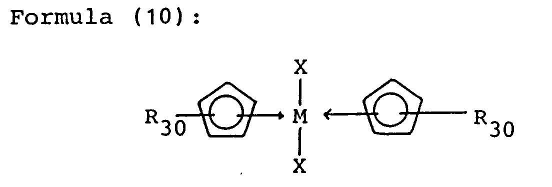 wherein R₃₀ denotes a hydrogen atom, halogen atom, alkyl group, acyl group or aryl group; X is optional and may denote Cl and M denotes Ni or Zr. 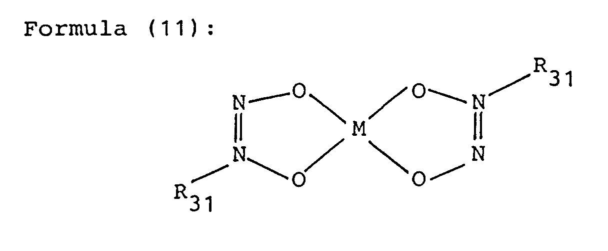 wherein R₃₁ denotes an alkyl group or aryl group; and M denotes Cu, Ni or Co. 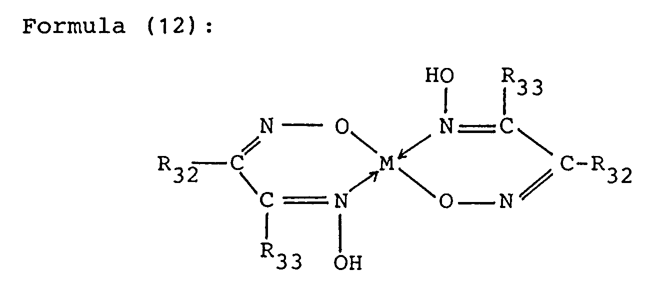 wherein R₃₂ and R₃₃ respectively denote an alkyl group or aryl group; and M denotes Ni. 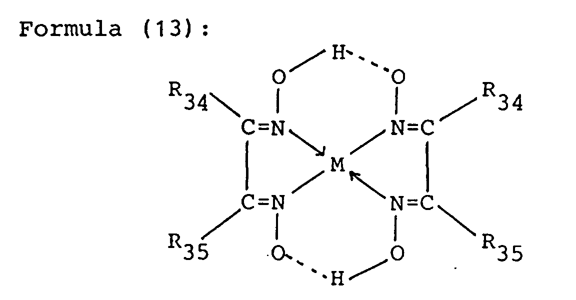 wherein R₃₄ and R₃₅ respectively denote an alkyl group, amino group, aryl group or furan group capable forming an alicyclic ring in combination with each other; and M denotes Ni. 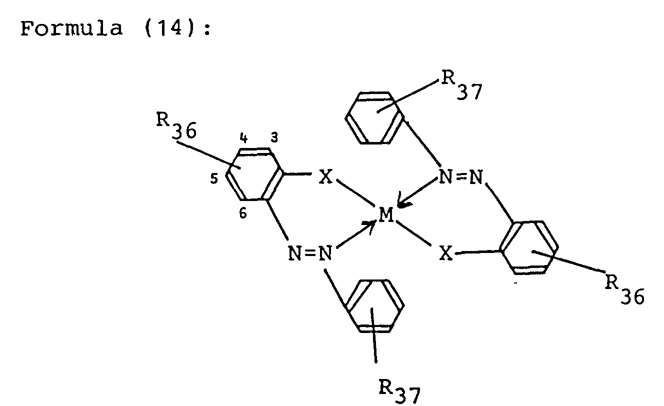 wherein R₃₆ and R₃₇ denote a hydrogen atom, halogen atom or alkyl group; X denotes an oxygen atom or sulfur atom; and M denotes Ni. 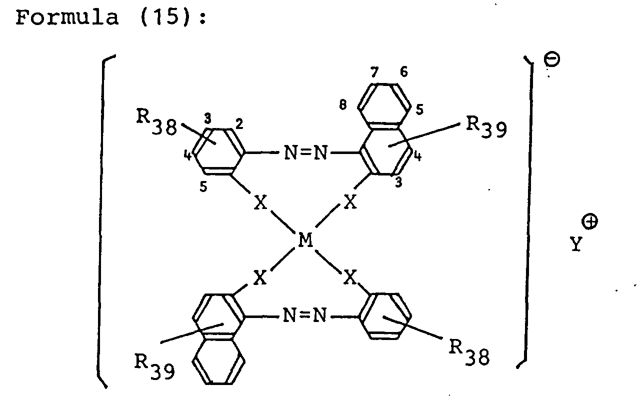 wherein R₃₈ and R₃₉ respectively denote a hydrogen atom, alkyl group, halogen atom or nitro group; X denotes an oxygen atom or sulfur atom; M denotes Ni; and Y ^{⊕} denotes a quarternary ammonium cation. 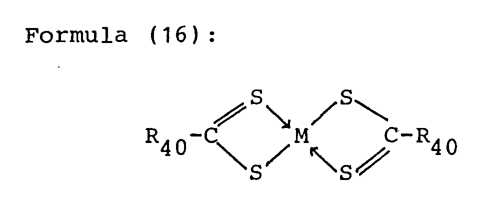 wherein R₄₀ denotes an amino group; and M denotes Cu, Ni, Co or Pd. 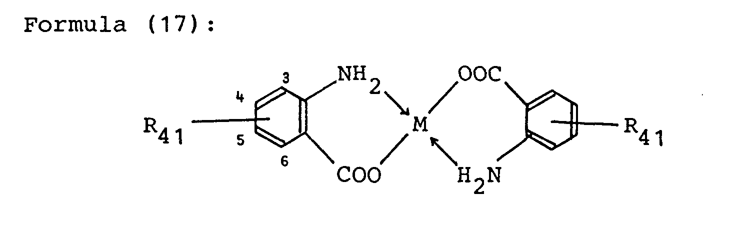 wherein R₄₁ denotes a hydrogen atom, halogen atom, alkyl group, acyl group, nitro group or alkoxyl group; and M denotes Zn, Cu, Ni or Co.

Next, some representative examples of the compounds represented by the above formulas (1) - (17) are listed in the following Table 1.

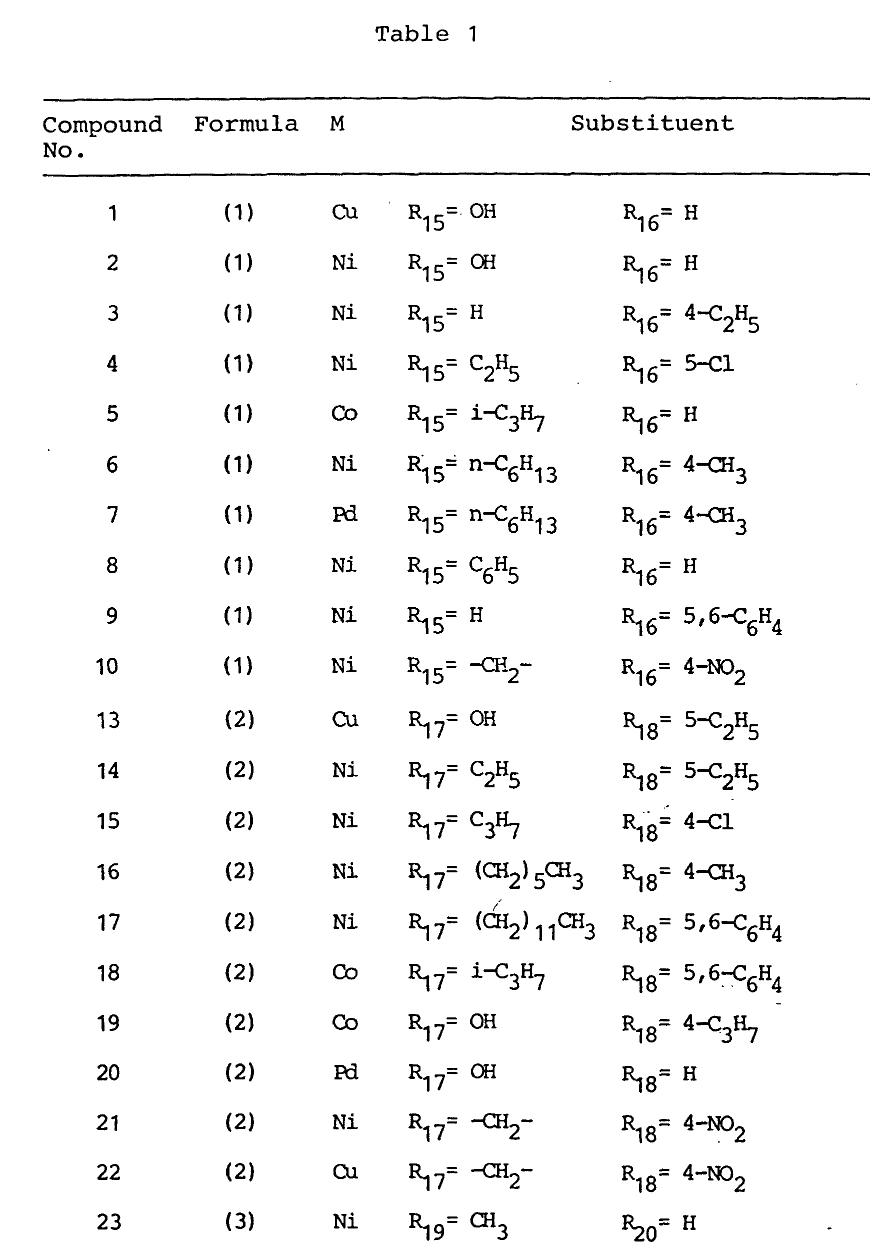

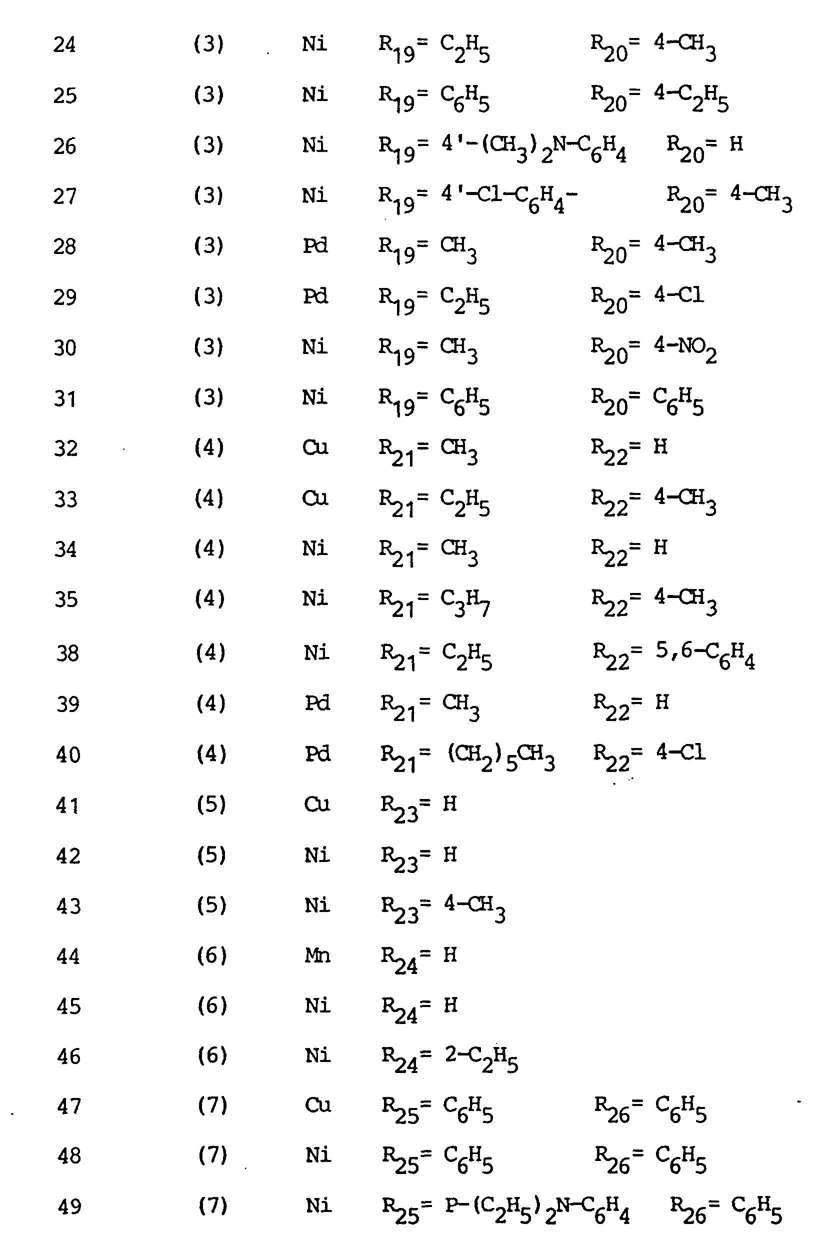

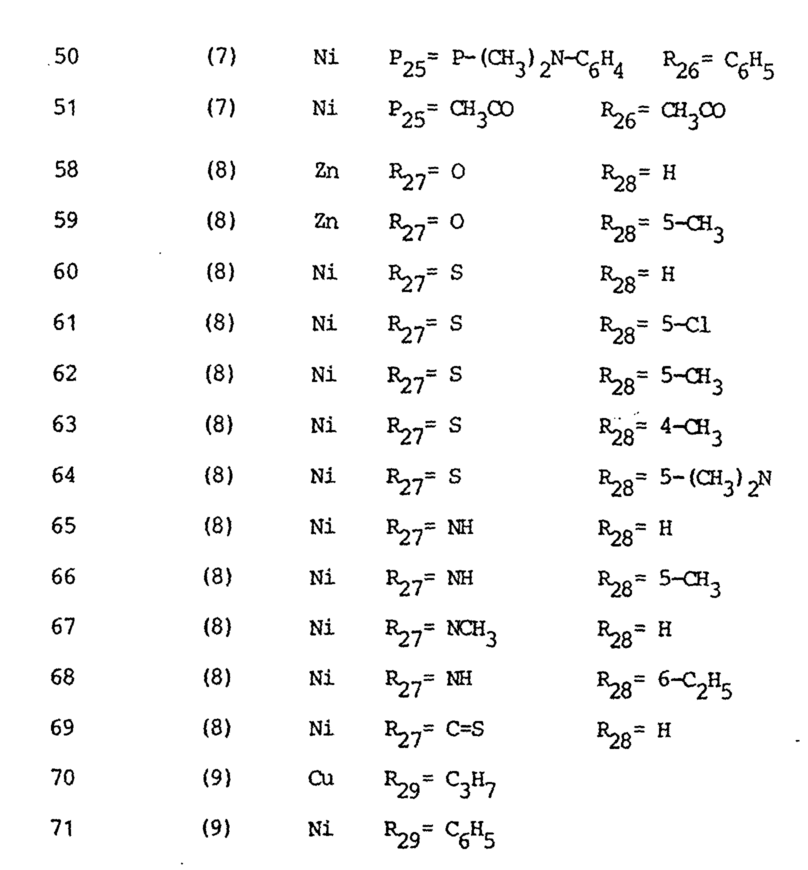

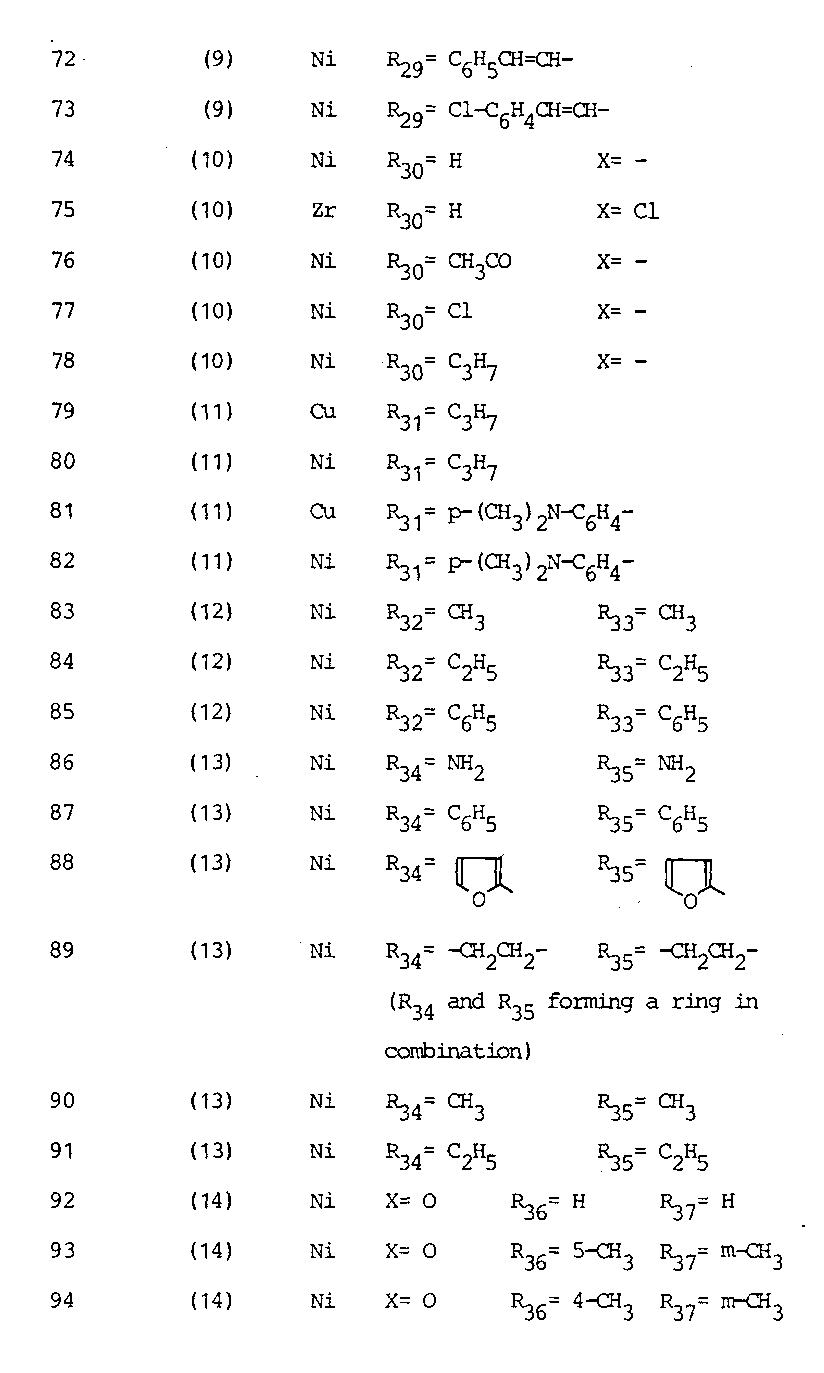

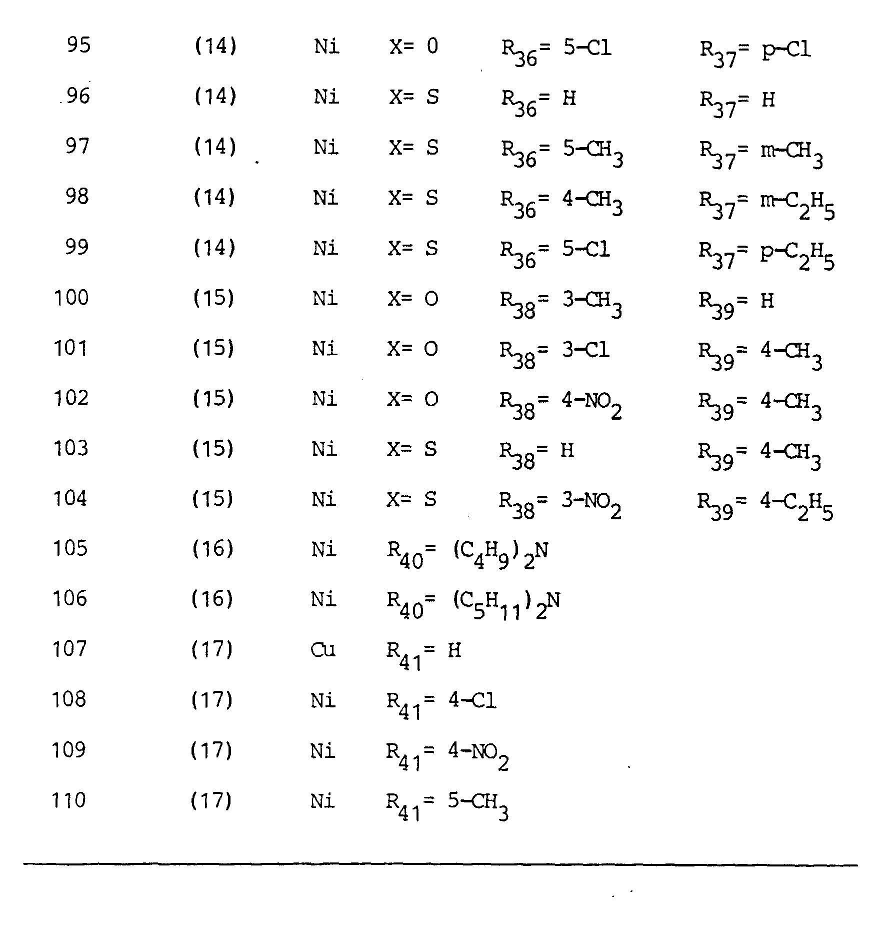

The above-mentioned metal chelate compounds may be synthesized according to methods as disclosed by Hurry B. Gray, Journal of the Am. Chem. Soc., vol. 88, pp 43-50 or by Shlantz and Mybake, Journal of the Am. Chem. Soc., vol. 87, pp 1483-1489.

The above metal chelate compounds show an absorptivity in the near infrared region, are useful as stable light-absorbing colorants and further have good mutual solubility with or dispersibility in a polymer liquid crystal. Some metal chelate compounds among them show dichroism, and a thermally stable guest-host type memory or display device can be obtained by mixing such a compound showing dichroism within a polymer liquid crystal. It is possible to incorporate two or more species of the metal chelate compound in a polymer liquid crystal.

The metal chelate compound may be added in a proportion of 0.01 - 10 wt. %, preferably 0.05 - 5 wt. %, of the liquid crystal.

In combination with the above metal chelate compound, it is possible to use another near-infrared absorbing colorant or dichroic colorant. Representative examples of such near-infrared absorbing colorants may include cyanine, merocyanine, phthalocyanine, tetrahydrocholine, dioxazine, anthraquinone, tripheno-dithiazine, xanthene, triphenylmethane, pyrylium, croconium, azulene and triphenylamine. These colorants can be added in a proportion of 0.01 to 10 wt. % of the polymer liquid crystal so as not to give ill effects to the glass transition point or melting point of the polymer liquid crystal.

As additive for enhancing absorptivity in the near-infrared region used in the present invention, the specific soluble colorant of formula (I) is added in addition to the polymer liquid crystal.

It has been generally known that a colorant having a bar shape similarly as a liquid crystal molecule has a good solubility in a liquid crystal and does not hinder the liquid crystal phase. However, such a bar-shaped colorant soluble in a liquid crystal generally has a low molecular weight and remarkably lowers the melting point or glass transition point of a polymer liquid crystal when added to the latter.

According to our investigation, it has been found that a soluble organic large cyclic colorant having a planar or plate-like shape instead of a bar shape and having 10 or more carbon atoms, preferably 20 or more carbon atoms, not only has an excellent durability in resistance to the repetition of an optical recording process including recording, reproduction and erasure but also shows good solubility because of its shape in a polymer liquid crystal, to thereby provide a high absorptivity, good S/N ratio and low bit error rate (BER). Further, it has been also found that such a large cyclic colorant, because of its two-dimensional extension, does not hinder the liquid crystal characteristic of a polymer liquid crystal nor does it result in an increased mobility which leads to a remarkable lowering in clear point (T_{Cl}), glass transition point (Tg) and melting point.

The large cyclic colorants to be used for the present invention include naphthalocyanines represented by the following formula (I), some of which may also be classified as metal chelate compounds: 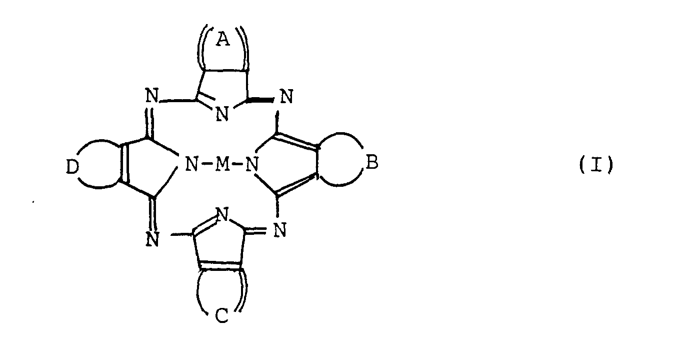 wherein the symbols A, B, C and D respectively denote the following divalent group: 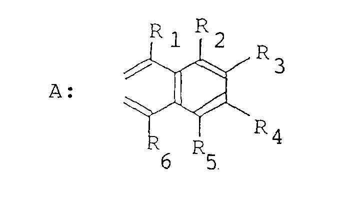 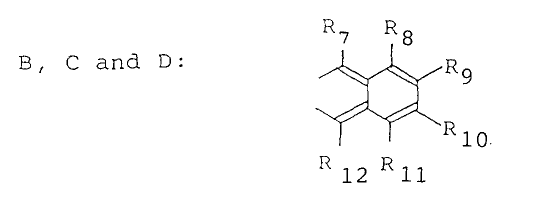 wherein R₁ to R₁₂ respectively denote a hydrogen group, a linear or branched alkyl, alkoxy or alkenyl group having 4 - 20 carbon atoms, or a group selected from the following:
-SiQ₁Q₂Q₃, -SQ₄, -COQ₅, COOQ₆ and -NQ₇Q₈, wherein Q₁ - Q₈ respectively denote a hydrogen atom, or a linear or branched alkyl or alkenyl group having 1 - 20 carbon atoms;
M denotes Ge, Sn, transition metal, Al, Ga, In, alkaline earth metal, lanthanide element or actinide element, or an oxide, halogenide or alkoxide thereof.

It is particularly important to use a semiconductor laser having a wavelength in the region of near infrared to visible red from the view point of the campactness and high performance of a recording and reproduction apparatus. As soluble organic large cyclic colorants showing an absorptivity in the wavelength region, naphthalocyanines are particularly preferred, among which those represented by the following formula (II) are particularly suitable for the recording medium of the present invention because of excellent solubility thereof. 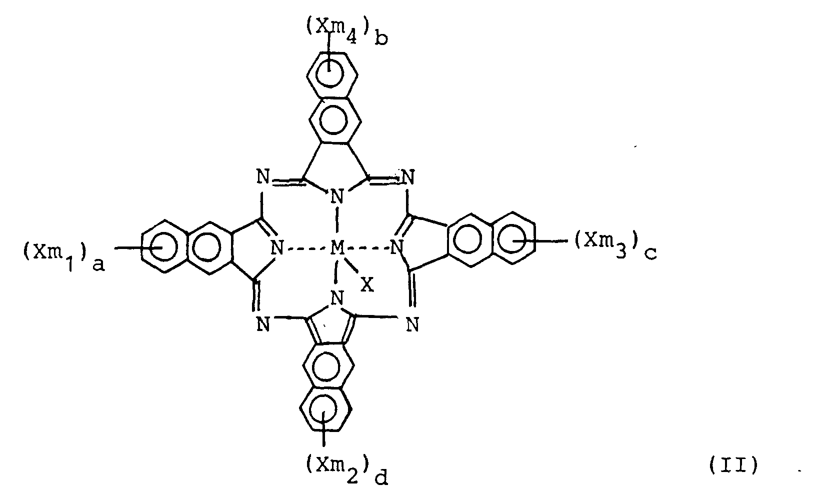 wherein M denotes Ge, Sn, transition metal, Al, Ga, In, alkaline earth metal, lanthanide element or actinide element; X denotes halogen atom, alkyl group, carboxyl group, alkoxy group, ether group or alkenyl group; Xm₁ - Xm₄ respectively denote halogen atom, alkyl group, sulfamoyl group, ether group or alkenyl group; a - d are respectively a number of 0 - 4 satisfying the relationship of a+b+c+d ≧ 1.

These compounds may be easily prepared, for example, by a method disclosed in Japanese Laid-Open Patent Application JP-A (Kokai) Sho 62-90291.

The soluble organic large cyclic colorant may be added to a polymer liquid crystal in a proportion of 0.01 - 40 wt. %, preferably 0.1 - 25 wt. %, of the latter.

The organic large cyclic colorant can be used in combination with another near-infrared-absorbing colorant or dichroic colorant, examples of which may include cyanine, merocyanine, naphthoquinone, tetra-hydrocholine, dioxazine, anthraquinone, tripheno-dithiazine, xanthene, triphenylmethane pyrylium, croconium, azulene, triphenylamine, and metal chelate compound. These additional colorants can be added in a proportion of ordinarily 0.01 - 10 wt. %, preferably 0.01 - 2 wt. %, of the polymer liquid crystal so as not to give ill effects to the glass transition point or melting point of the polymer liquid crystal.

In addition, it is possible to add an ultraviolet absorber, antioxidant or low-molecular weight liquid crystal within an extent of not giving ill effects to the glass transition point or melting point of the polymer liquid crystal.

The polymer liquid crystal used in the present invention is a thermotropic one, of which a mesomorphic phase of nematic, smectic, chiral smectic, cholesteric or discotic phase is utilized.

Specific examples of the polymer liquid crystal may include: main chain type polymer liquid crystal, side chain-type polymer liquid crystal, main chain and side chain-type polymer liquid crystal and discotic polymer liquid crystal as listed in the following Table 2.

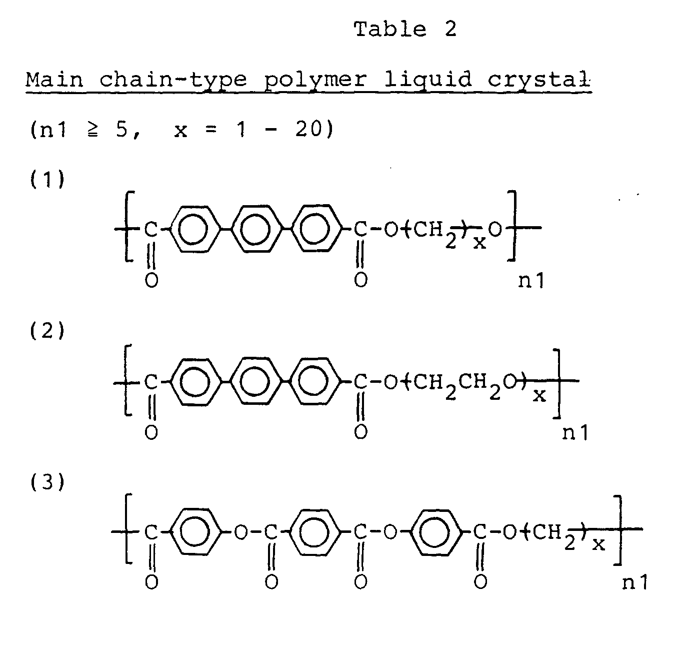

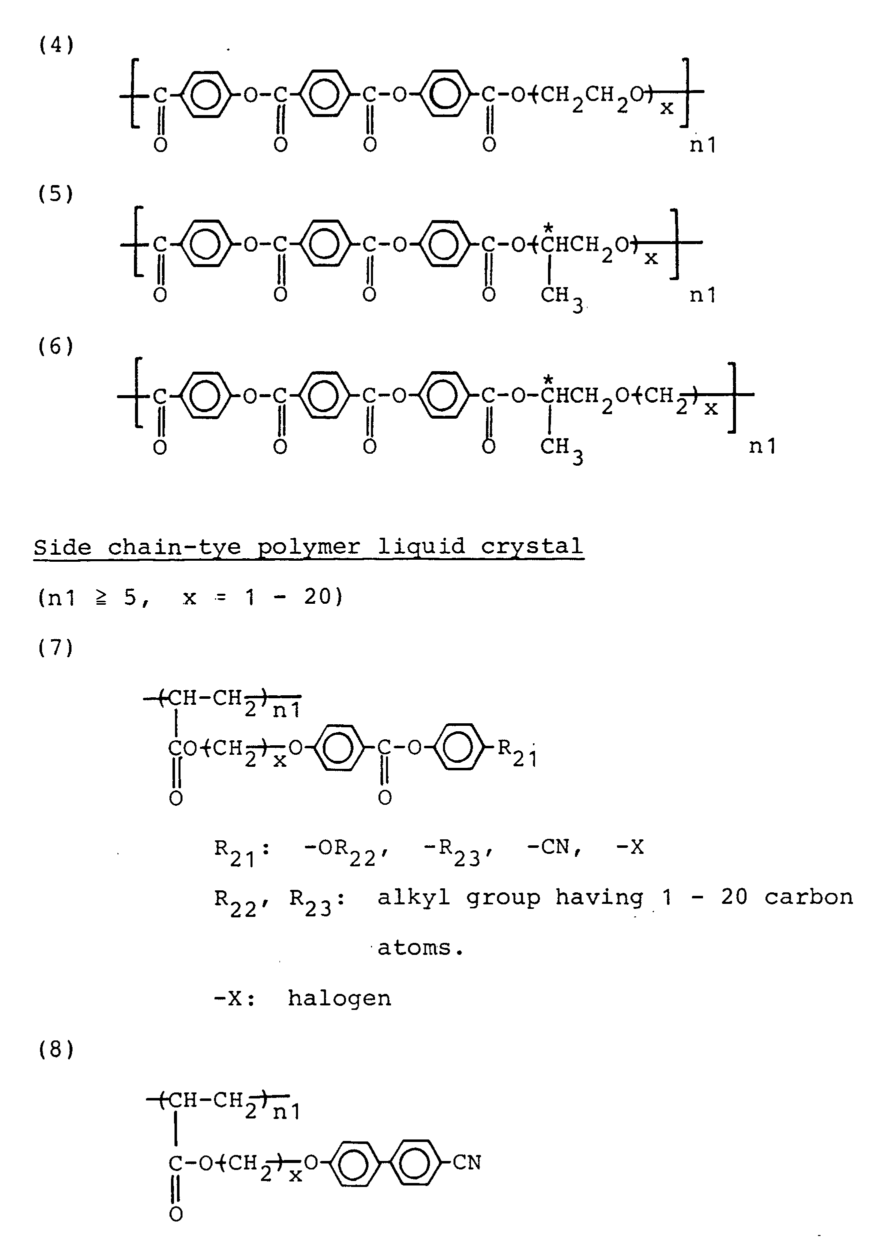

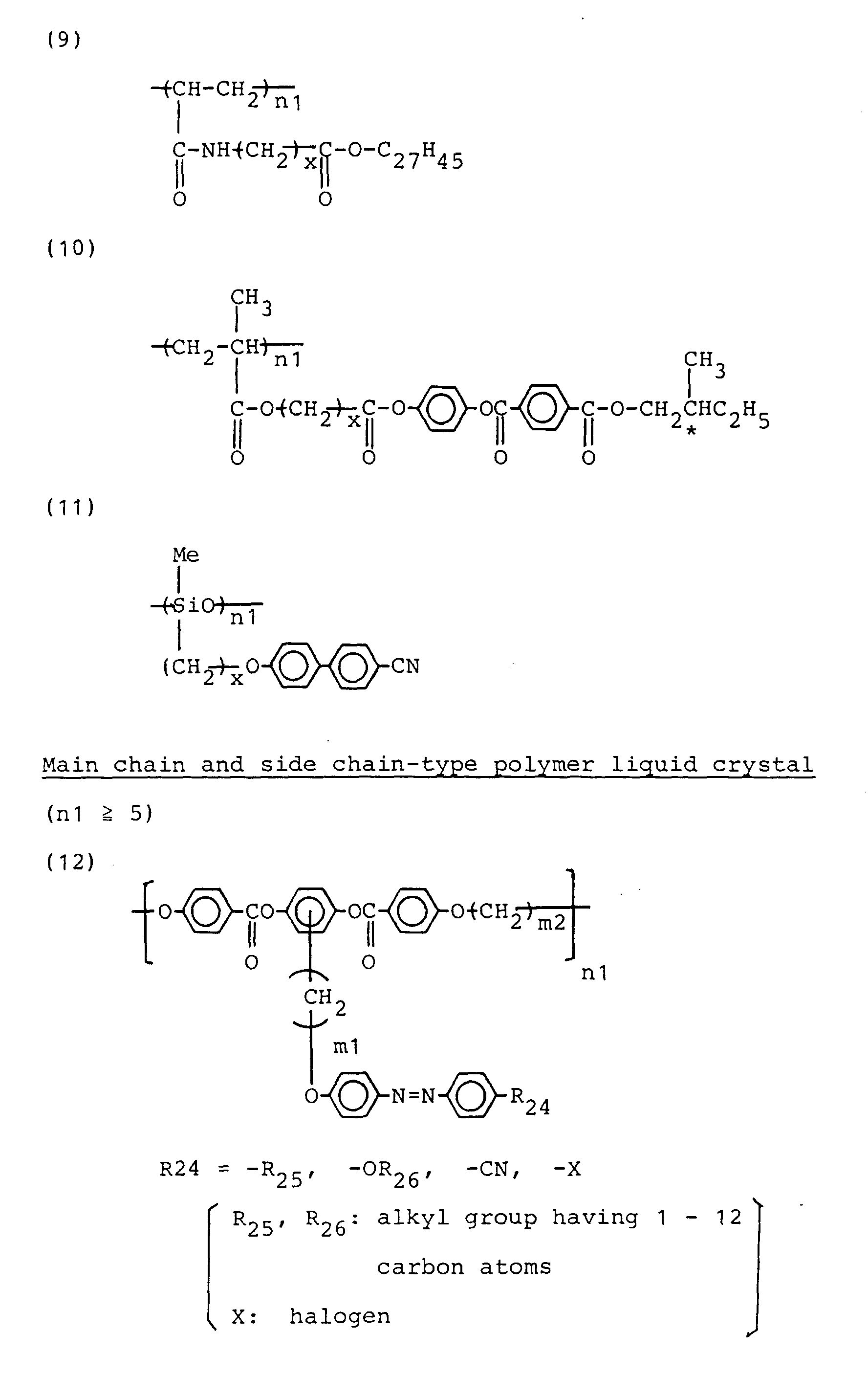

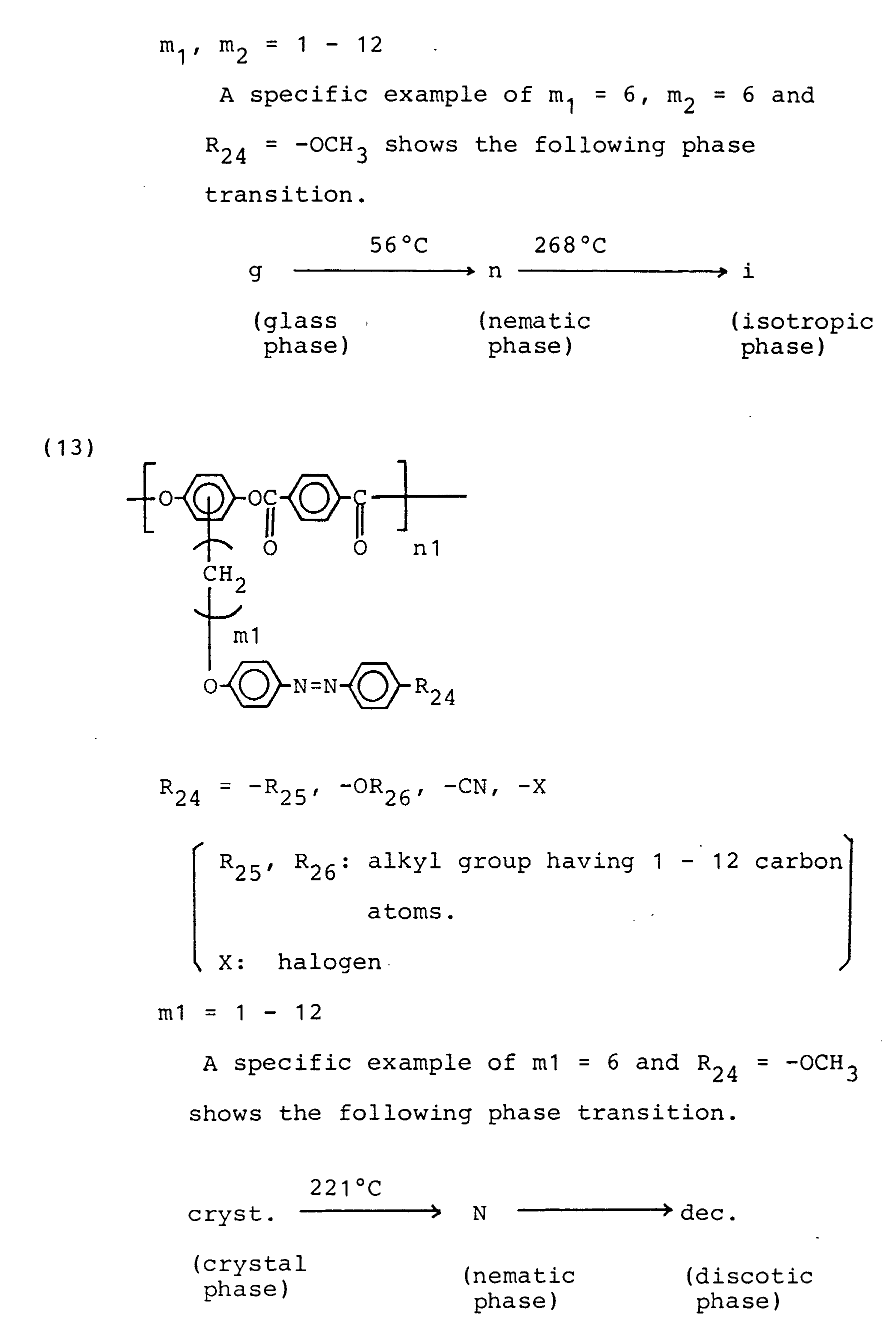

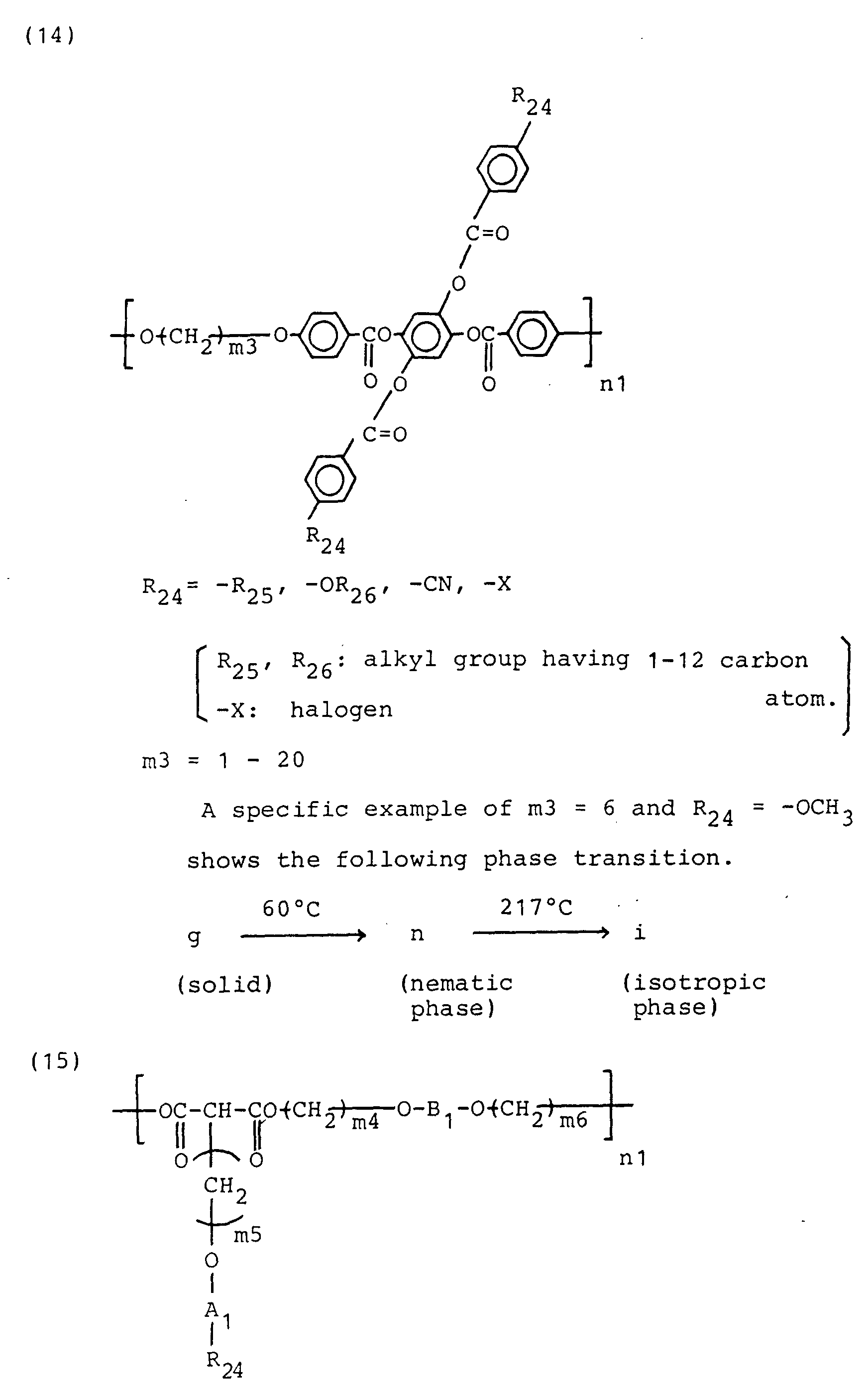

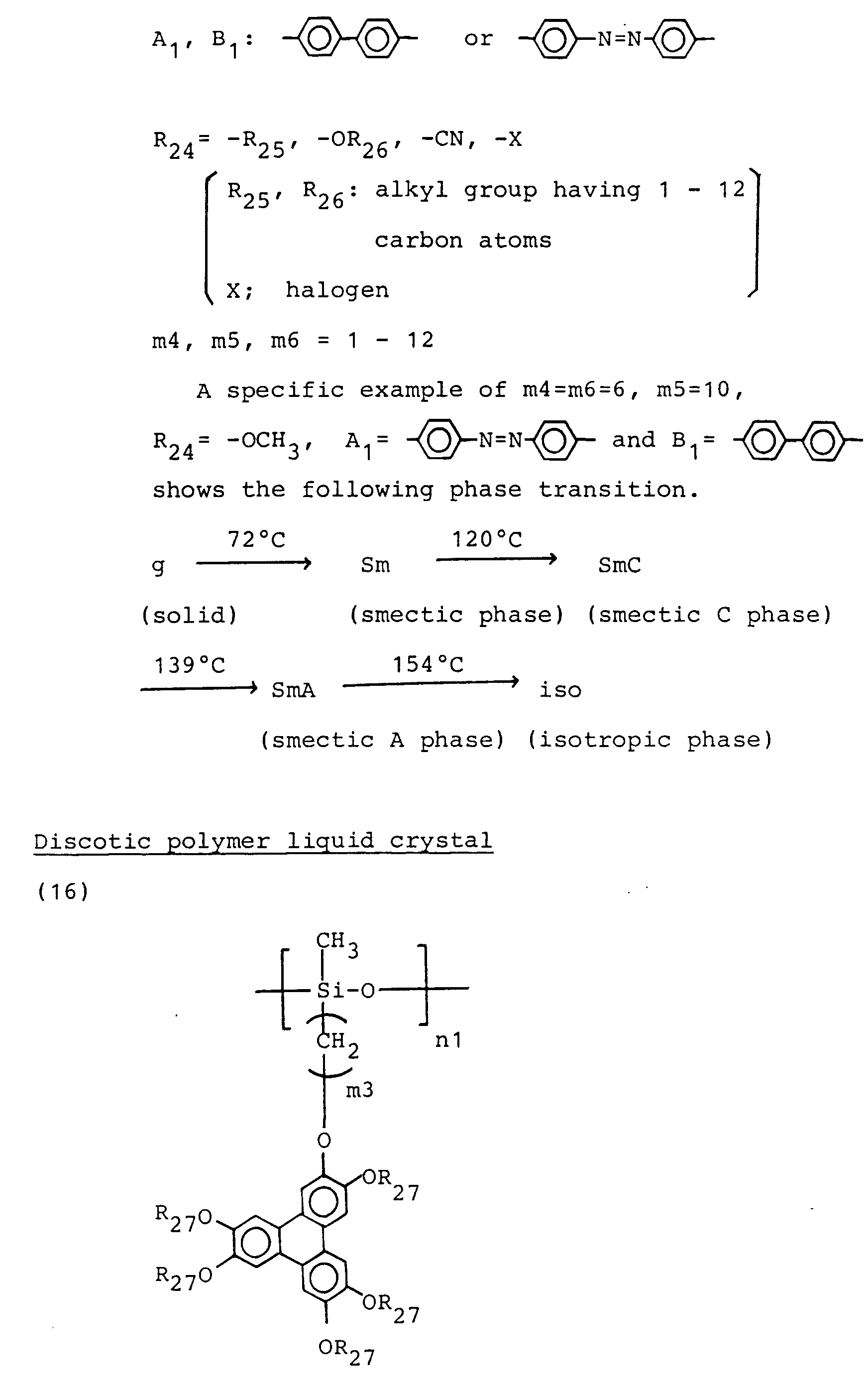

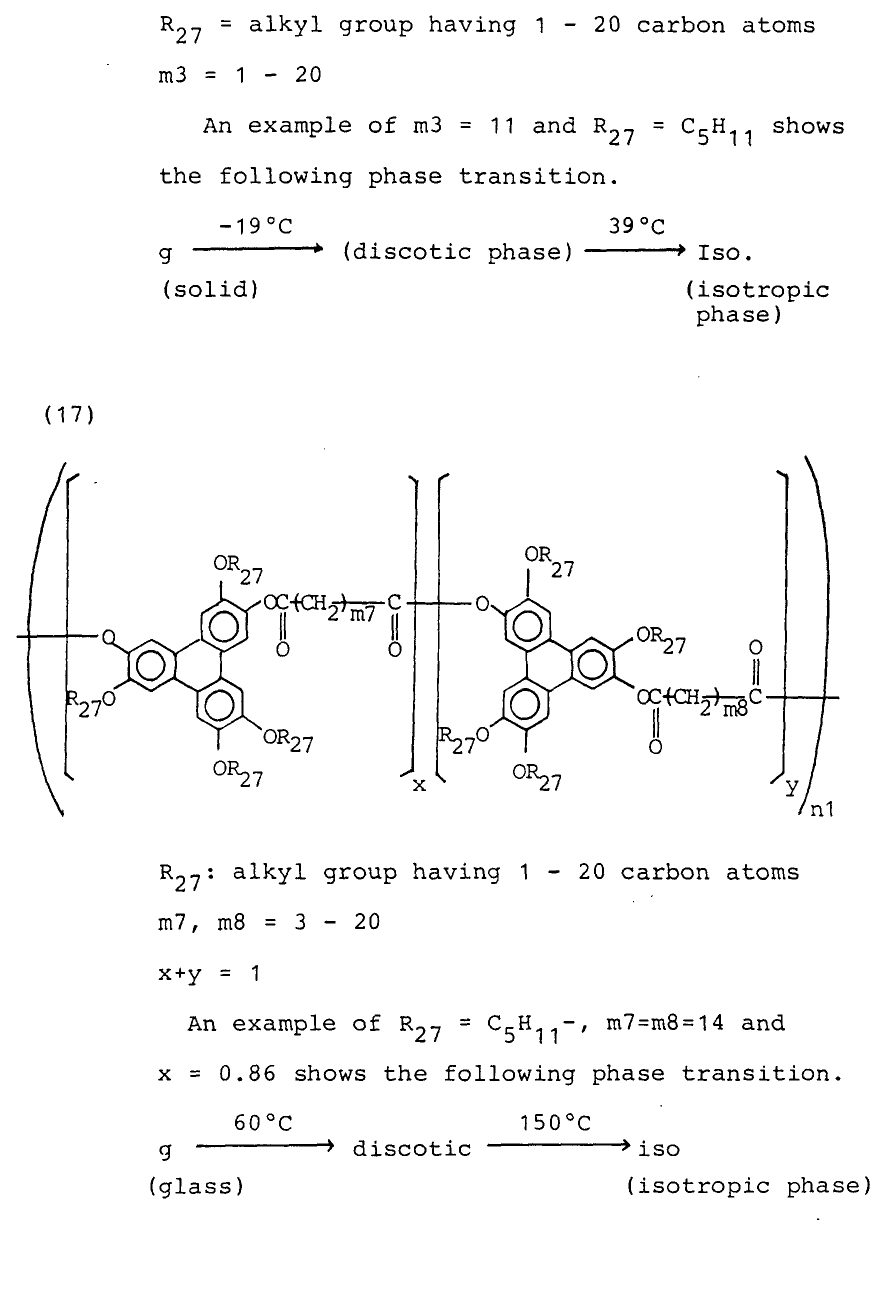

In the present invention, it is possible to use a mixture of a plurality of different polymer liquid crystals. It is also possible to use a mixture of a polymer liquid crystal and a low-molecular weight liquid crystal. In such a case, it is preferred to restrict the amount of the low-molecular weight liquid crystal to 10 parts by weight or less with respect to 1 part by weight of the polymer liquid crystal. For this purpose, an ordinary low-molecular weight liquid crystal may be used without any restriction. Herein, the term "low-molecular weight (or non-polymeric) liquid crystal" is used in contrast with the term polymer liquid crystal and refers to a liquid crystal or mesomorphic compound which is substantially free of repetition of a mesogen unit and has two recurring mesogen units at the maximum, if any. The term "polymer liquid crystal" used herein refers to a liquid crystal or mesomorphic compound having a number of recurring units of 5 or more, preferably 10 or more.

It is also possible to use a ferroelectric liquid crystal having a chiral asymmetric carbon atom which can be used alone or compatibly mixed with a polymer liquid crystal as enumerated above to provide a ferroelectric polymer liquid crystal composition.

It is further possible as desired to incorporate in the recording layer comprising the above mentioned polymer liquid crystal an ordinary polymer, such as olefin type resin, acrylic resin, polystyrene resin, polyester resin, polyurethane resin, or polycarbonate resin; an oligomer, an antioxidant, a plasticizer, an ultraviolet absorber, a quencher, etc.

The polymer liquid crystal or its composition may be formed into a recording layer in the form of a film by coating a substrate with a solution of the polymer liquid crystal in an appropriate solvent by spin coating, dipping etc., followed by drying; by sandwiching a polymer liquid crystal with a pair of substrates followed by pressing under heating; or by using a film of a polymer liquid crystal prepared in advance. The recording layer of a polymer liquid crystal may preferably have a thickness in the range of 0.01 - 100 µm.

In the case of effecting recording and erasure through utilization of transition between liquid crystal phase and isotropic phase and fixing of the resultant states by using a glass transition point, a recording layer containing a polymer liquid crystal need not be subjected to an aligning treatment but can be simply formed by application of a polymer liquid crystal composition as described above.

On the other hand, a generally known orientation treatment can be applied in order to effect uniform alignment of the polymer liquid crystal in a particular direction. Such known orientation methods may include, stretching, rubbing, oblique vapor deposition, application of a shearing force to a polymer liquid crystal sandwiched between a pair of substrates, gradual phase transition under application of a magnetic field, and orientation by using spacer edges.

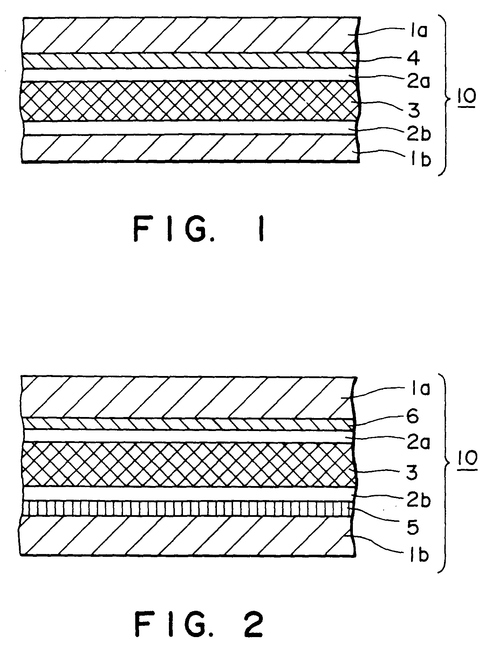

Figures 1 and 2 are respectively a schematic sectional view showing an embodiment of the data recording medium according to the present invention. A data recording medium shown in Figure 1 comprises a pair of substrates 1a and 1b having thereon alignment control films 2a and 2b, respectively, a recording layer 3 according to the present invention disposed between the substrates 1a and 1b, and a reflection layer 4. Further, a data recording medium shown in Figure 2 comprises members 1a, 1b, 2a, 2b and 3 which are similar to those denoted by the corresponding numerals in Figure 1, and a transparent electrode 5 and an electrode and reflection layer 6.

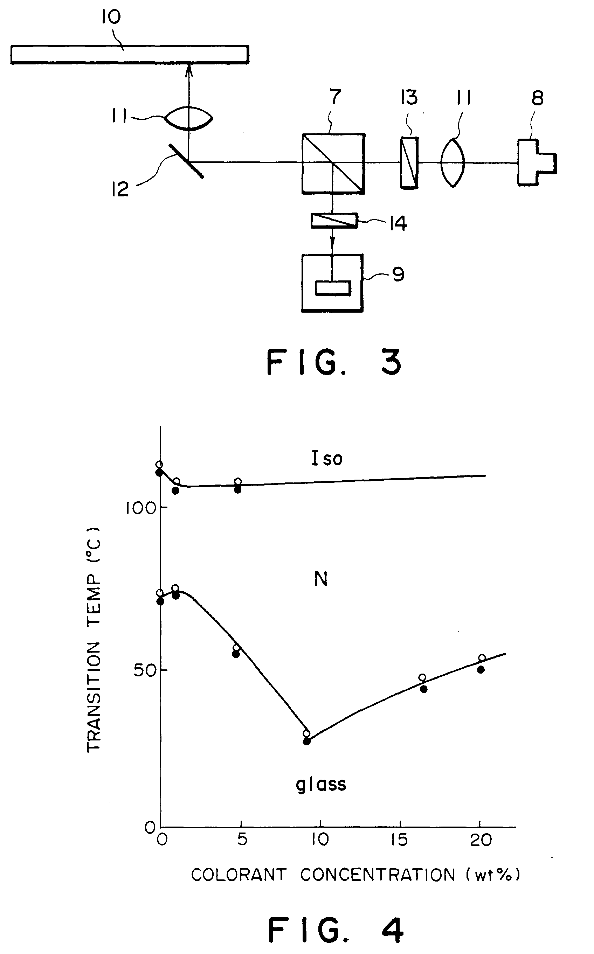

Figure 3 shows an outline of a system for illuminating such a data recording medium 10 with a laser beam to effect writing and readout. Referring to Figure 3, for the recording, a laser beam emitted from a semiconductor laser 8 as a laser oscillator is focused through optical systems 11 and a reflection mirror 12 to be incident on the recording medium 10.

For the readout, a laser beam emitted from the semiconductor laser 8 is passed through the optical systems 11 the polarizer 13, a beam splitter 7 and the reflection mirror 12 to illuminate the recording medium 10, and the reflected light from the recording medium 10 is again passed through the beam splitter 7 and an analyzer 14 to be detected by an optical detector 9.

Hereinbelow, the present invention will be explained in more detail with reference to Examples.

### Reference Example

A glass substrate in the form of a disk with a diameter of 130 mm and a thickness of 1.2 mm was coated with a polyamic acid solution ("PIQ" (trade name), mfd. by Hitachi Kasei Kogyo K.K.), followed by heating and rubbing, to be provided with a polyimide alignment film.

On the polyimide film, the following side chain-type polymer liquid crystal and a metal chelate compound (Compound No. 3 in the above Table 1) in a proportion of 0.15 wt. % of the liquid crystal were mixed with 1,1,2-trichloroethane and applied by spinner coating, followed by drying, to form a 3 µm-thick recording layer.

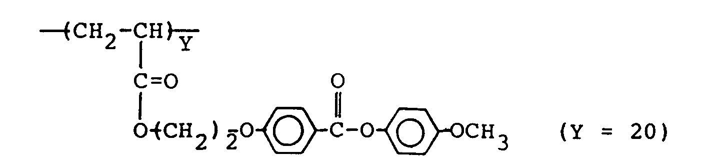

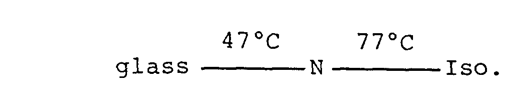

Separately, a glass substrate coated with a reflection film (vapor-deposited aluminum film) was provided with a polyimide alignment film similarly as above and superposed on the recording layer of the polymer liquid crystal by the medium of a 3 µm-thick spacer disposed at the periphery. A partial section of the thus formed laminate is shown in Figure 1. The above laminate was heated to 90°C and gradually cooled to provide the liquid crystal layer with a nematic phase, whereby a data recording medium was prepared.

As shown in Figure 3, the recording medium was irradiated from its transparent substrate side with a laser beam of 830 nm from a semiconductor laser 8 at a recording power of 3.0 mW, whereby the irradiated part caused an alignment disorder to form a scattering state. Then, the thus formed record was reproduced by illumination at a readout power of 0.3 mW. The reflected light was detected by the optical detector 9 to provide a reproduction contrast ratio (= |A-B|/A; A and B: signal intensities from non-recorded and recorded portions, respectively).

The recording medium after the recording was subjected to an erasure operation comprising heating to 90°C followed by gradual cooling to cause realignment of the recorded portion.

The above recording and erasure operations were repeated in 300 cycles, and the recording medium after the 300 cycles of the recording and erasure (more exactly, after recording) was subjected to the above reproduction operation to measure a reproduction contrast ratio as described above.

### Example 1

The following polymer liquid crystal and soluble naphthalocyanine ("IRD 1001", mfd. by Yamamoto Gosei K.K.) were mixed in various proportions, followed by removal of the solvent by evaporation under a reduced pressure to form a series of polymer liquid crystal compositions.

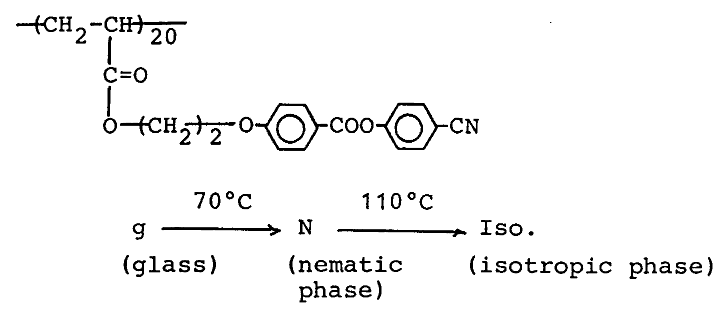

Figure 4 is a phase diagram showing the phase transition characteristics of the above-prepared polymer liquid crystal compositions confirmed by DSC (differential scanning calorimetry) and microscopic observation. As shown in Figure 4, the above series of polymer liquid crystal compositions showed a stable liquid crystal phase even at a colorant concentration of 20 wt. % or above and the glass transition temperatures thereof were stable in the range of 30 - 70°C.

### Example 2

A glass substrate in the form of a disk with a diameter of 130 mm and a thickness of 1.2 mm was coated with a polyamic acid solution ("PIQ" (trade name), mfd. by Hitachi Kasei Kogyo K.K.), followed by heating and rubbing, to be provided with a polyimide alignment film.

On the polyimide film, 10 wt. parts of the following side chain-type polymer liquid crystal and soluble naphthalocyanine ("IRD 1001", Yamamoto Gosei K.K.) in a proportion of 5.0 wt. % of the liquid crystal were mixed with 100 wt. parts of 1,1,2-trichloroethane and applied by spinner coating, followed by drying, to form a 1 µm-thick polymer liquid crystal layer.

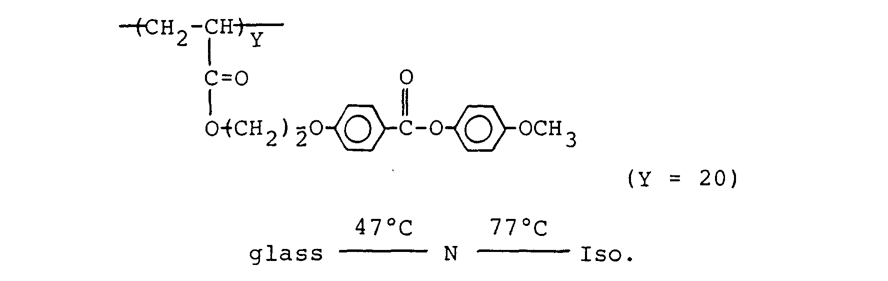

The polymer liquid crystal composition showed Tg (glass transition temperature) = 35°C and T_{Cl} (nematic-isotropic transition temperature) = 75°C. The T_{Cl} is not substantially different from and the Tg is slightly lower than those of the polymer liquid crystal alone. The liquid crystal composition also showed a good liquid crystal temperature range.

Separately, a glass substrate coated with a reflection film (vapor-deposited aluminum film) was provided with a polyimide alignment film similarly as above and superposed on the recording layer of the polymer liquid crystal by the medium of a 1 µm-thick spacer disposed at the periphery. A partial section of the thus formed laminate is shown in Figure 1. The above laminate was heated to 90°C and gradually cooled to provide the liquid crystal layer with a nematic phase, whereby a data recording medium was prepared.

As shown in Figure 3, the recording medium was irradiated from its transparent substrate side with a laser beam of 830 nm from a semiconductor laser 8 at a recording power of 3.0 mW, whereby the irradiated part caused an alignment disorder to form a scattering state. Then, the thus formed record was reproduced by illumination at a readout power of 0.3 mW. The reflected light was detected by the optical detector 9 to provide a reproduction contrast ratio (= |A-B|/A; A and B: signal intensities from non-recorded and recorded portions, respectively).

The recording medium after the recording was subjected to an erasure operation comprising heating to 90°C followed by gradual cooling to cause realignment of the recorded portion.

The above recording and erasure operations were repeated in 300 cycles, and the recording medium after the 300 cycles of the recording and erasure (more exactly, after recording) was subjected to the above reproduction operation to measure a reproduction contrast ratio as described above.

As a result, reproduction contrast ratio of 0.4 was obtained at the initial stage, and a reproduction contrast of 0.39 was obtained, thus showing a good durability. No difference in Tg or T_{Cl} was observed either.

### Comparative Example 1

A data recording medium was prepared and evaluated in the same manner as in Example 2 except that the metal chelate compound mixed with the polymer liquid crystal was replaced by the following colorant in an amount of 5 wt. % of the polymer liquid crystal.

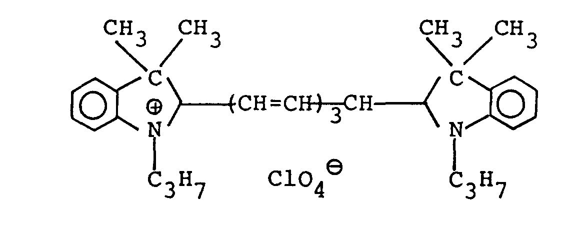

The resultant composition showed no liquid crystal phase at all.

### Comparative Example 2

A glass substrate of 130 mm diameter and 1.2 mm thick provided with a transparent electrode layer of vapor deposited ITO was coated with a polyamic acid solution ("PIQ", Hitachi Kasei Kogyo K.K.), followed by heating and rubbing, to form a polyimide alignment film.

On the polyimide film, 10 wt. parts of the following polymer liquid crystal and 0.3 wt. part of soluble phthalocyanine were dissolved in 100 wt. parts of 1,1,2-trichloroethane and applied by spinner coating, followed by drying, to form a 3 µm-thick liquid crystal layer:

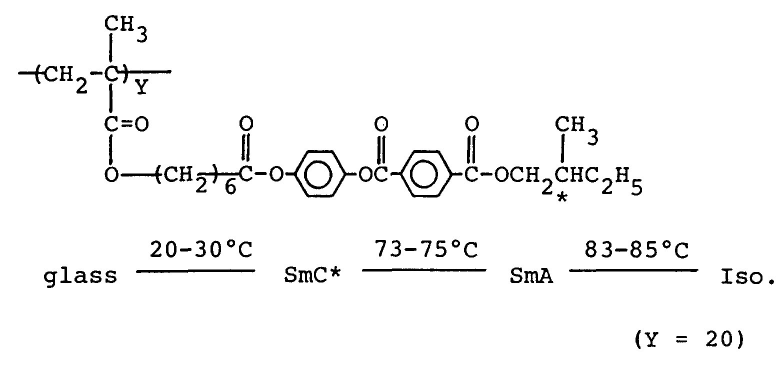

Separately, a glass substrate coated with an electrode and reflection layer (vapor-deposited aluminum film) was provided with a polyimide alignment film similarly as above and superposed similarly as in the Reference Example on the above-prepared liquid crystal recording layer by the medium of a 3 µm-thick spacer. A partial section of the thus formed laminate is shown in Figure 2.

The above laminate was heated to 90°C and gradually cooled to have the liquid crystal layer assume a uniaxially aligned smectic phase. Under this state, an electric field of 5 V/µm was applied between the electrodes to uniformize the polarization direction, whereby a data recording medium was prepared.

The recording layer of the recording medium thus prepared was supplied with a reverse electric field of 5 V/µm between the transparent electrode (ITO) and the Al electrode and simultaneously irradiated from the transparent electrode side with a semiconductor laser beam of 830 nm at a recording power of 3.0 mW, whereby the irradiated part was heated to cause an inversion of the spontaneous polarization, so that recording was effected.

Then, the thus recorded recording medium was illuminated with a laser light at a reproduction power of 0.3 mW in the absence of an electric field and the reflected light containing differences in birefringence due to differences in polarization direction was incident to an optical detector to measure a reproduction contrast ratio of 0.4 (= |A-B|/A, A and B: reflected light intensities from recorded and non-recorded portions, respectively).

The whole area or the recorded portion of the recording layer after the recording was irradiated with a laser light at a power of 3.5 mW while being supplied with an electric field of the normal direction (the same as one used in preparation) to effect erasure of the record.

### Comparative Example 3

A data recording medium was prepared in the same manner as in Example 3 except that the colorant was replaced by the one used in Comparative Example 1.

The thus obtained data recording medium showed no contrast even after the application of electric fields in the same manner as in Comparative example 2.

As described above, the data recording medium of the present invention provides a high sensitivity and good S/N ratio and bit error rate (BER) in a recording, reproduction and erasure system utilizing light absorption-thermal conversion of a medium comprising a polymer liquid crystal and a light absorber. The data recording medium also shows excellent effects, such as a good repetition durability and a good storage stability of records because of a stable liquid crystal phase.

## Claims

1. A data recording medium, comprising a recording layer which in turn comprises a polymer liquid crystal and a colorant being soluble in said polymer liquid crystal and being a naphthalocyanine which is inclusively represented by the following Formula (I): 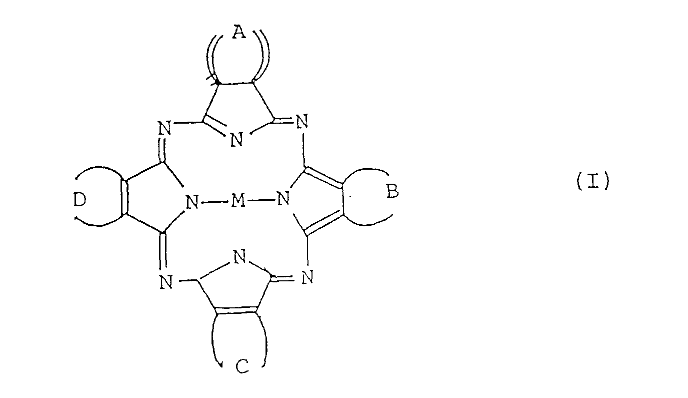 wherein the symbols A, B, C and D respectively denote the following divalent group: 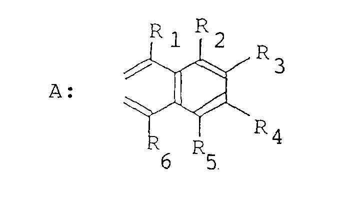 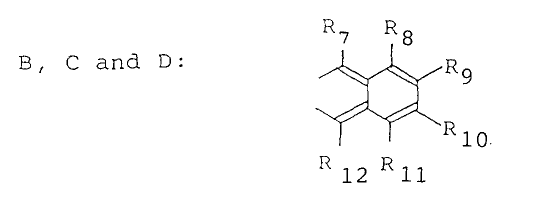 wherein R₁ - R₁₂ respectively denote a hydrogen group, a linear or branched alkyl, alkoxy or alkenyl group having 4 to 20 carbon atoms, or a group selected from the following: -SiQ₁Q₂Q₃, -SQ₄, -COQ₅, COOQ₆, and -NQ₇Q₈, wherein Q₁ - Q₈ respectively denote a hydrogen atom, or a linear or branched alkyl or alkenyl group having 1 to 20 carbon atoms;
M denotes Ge, Sn, transition metal, Al, Ga, In, alkaline earth metal, lanthanide element or actinide element, or an oxide, halogenide or alkoxide thereof.

2. A medium according to claim 1, wherein said colorant is a naphthalocyanine represented by the following formula (II): 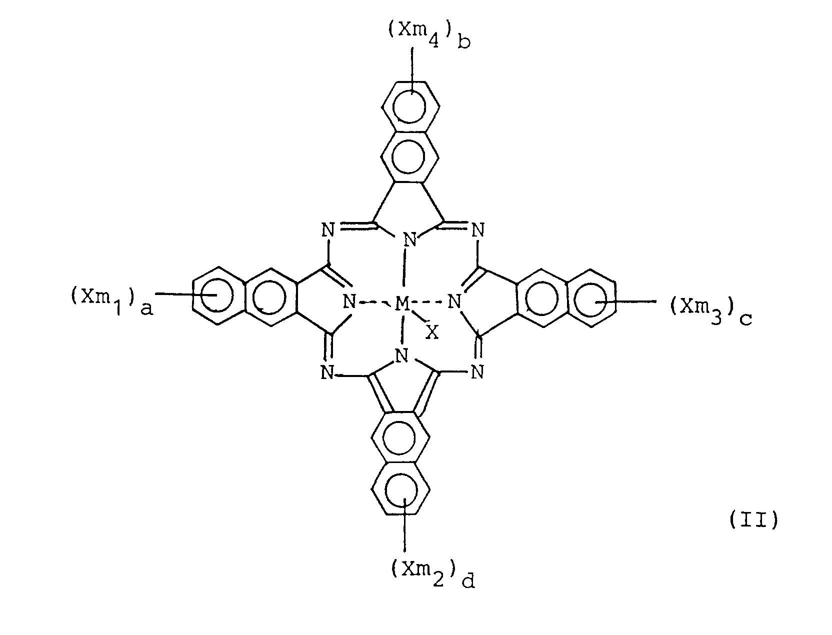
wherein M denotes Ge, Sn, transition metal, Al, Ga, In, alkaline earth metal, lanthanide element or actinide element; X denotes halogen atom, alkyl group, carboxyl group, alkoxy group, ether group or alkenyl group;
Xm₁ - Xm₄ respectively denote halogen atom, alkyl group, sulfomoyl group, ether group or alkenyl group; a - d are respectively a number of 0 to 4 satisfying the relationship of a+b+c+d ≥ 1.

3. A medium according to claim 1 or 2, wherein the recording layer further comprises a metal chelate being different from the colorant according to claims 1 or 2.

4. A medium according to claim 3, wherein the metal chelate compound belongs to any one of the classes of metal chelate compounds represented by the following formulas (1) to (17): 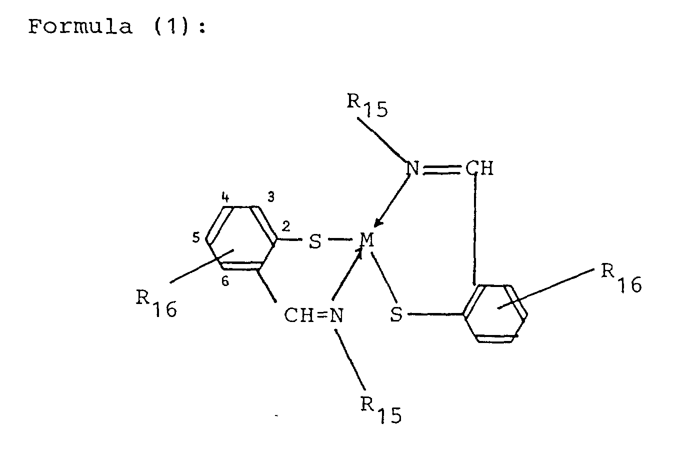 wherein R₁₅ denotes a hydrogen atom, hydroxyl group or alkyl group capable of being connected with another R₁₅; R₁₆ denotes alkyl group, halogen atom, hydrogen atom, nitro group, or benzo condensed group; and M denotes a center metal of Cu, Ni, Co or Pd. 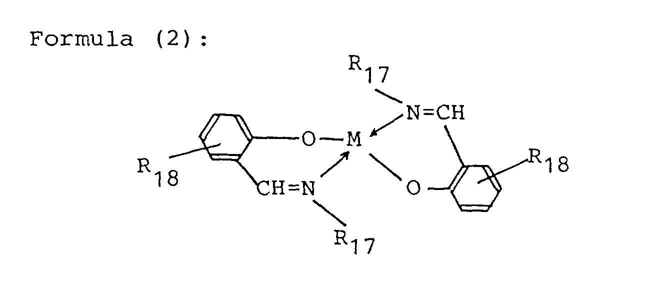 wherein R₁₇ denotes a hydrogen atom, hydroxyl group, alkyl group or aryl group capable of being connected with another R₁₇; R₁₈ denotes a halogen atom, alkyl group, nitro group or condensed benzo group; and M denotes Cu, Ni, Co or Pd. 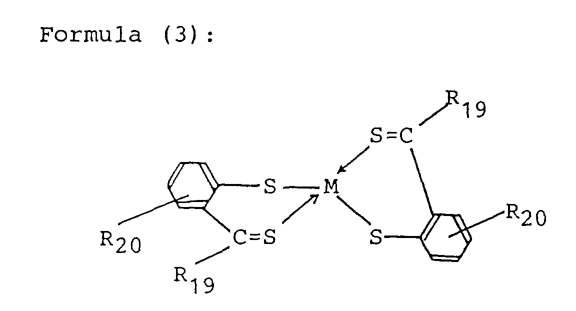 wherein R₁₉ denotes an alkyl group or aryl group;
R₂₀ denotes a hydrogen atom, halogen atom, alkyl group, aryl group, nitro group or condensed benzo group; and
M denotes Cu, Ni or Pd. 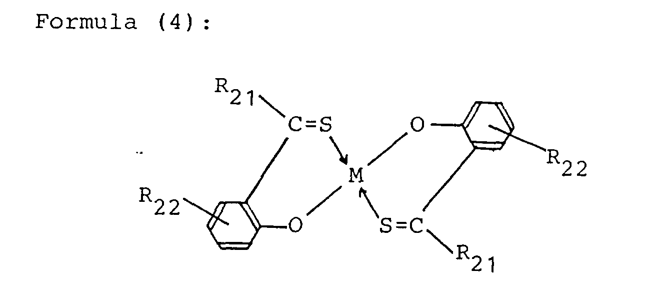 wherein R₂₁ denotes an alkyl group or aryl group;
R₂₂ denotes a hydrogen atom, halogen atom, alkyl group or condensed benzo group; and M denotes Cu, Ni or Pd. 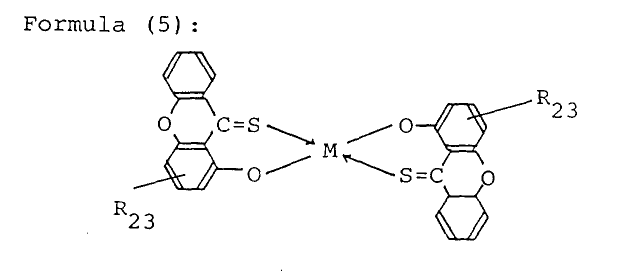 wherein R₂₃ denotes a hydrogen atom or alkyl group; and M denotes Cu or Ni. 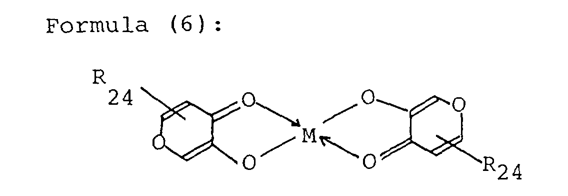 wherein R₂₄ denotes a hydrogen atom or alkyl group; and M denotes Cu, Ni, Co or Mn. 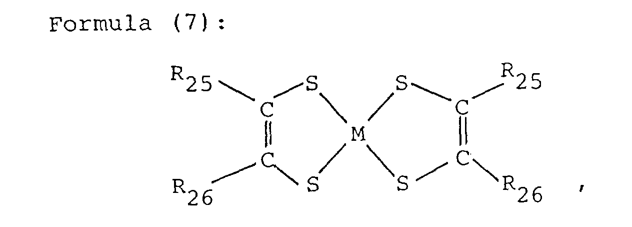 wherein R₂₅ and R₂₆ respectively denote a substituted or non-substituted alkyl group, acyl group or aryl group and R₂₅ and R₂₆ are capable of forming an aromatic ring in combination; M denotes Cu, Ni, Co or Pd which can have a charge and a counter ion. 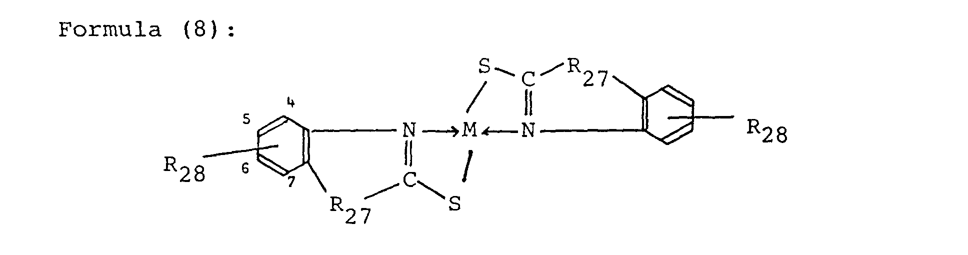 wherein R₂₇ denotes a sulfur atom, substituted or non-substituted amino group, oxygen atom or thioketone group; R₂₈ denotes a hydrogen atom, alkyl group, halogen atom or amino group; and M denotes Zn, Cu or Ni. 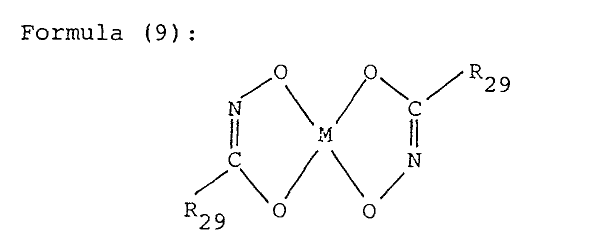 wherein R₂₉ denotes an alkyl group, aryl group or styryl group; and M denotes Cu, Ni or Co. 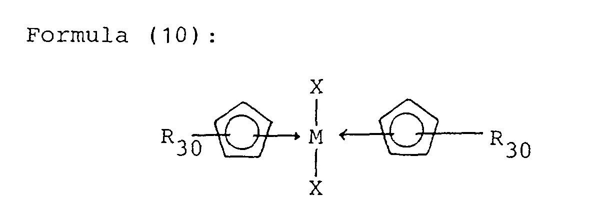 wherein R₃₀ denotes a hydrogen atom, halogen atom, alkyl group, acyl group or aryl group; X is optional and may denote Cl, and M denotes Ni or Zr. 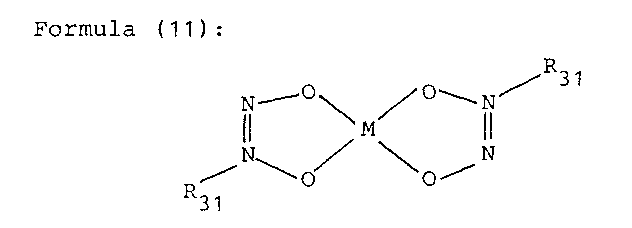 wherein R₃₁ denotes an alkyl group or aryl group; and M denotes Cu, Ni or Co. 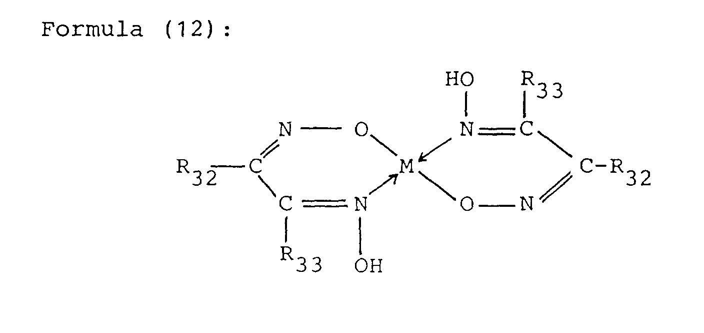 wherein R₃₂ and R₃₃ respectively denote an alkyl group or aryl group; and M denotes Ni. 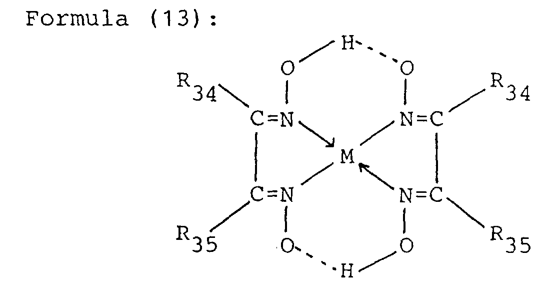 wherein R₃₄ and R₃₅ respectively denote an alkyl group, amino group, aryl group or furan group capable forming an alicyclic ring in combination with each other; and
M denotes Ni. 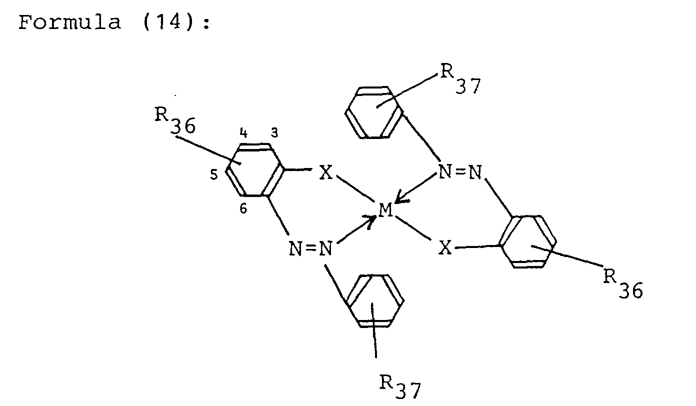 wherein R₃₆ and R₃₇ denote a hydrogen atom, halogen atom or alkyl group; X denotes an oxygen atom or sulfur atom; and M denotes Ni. 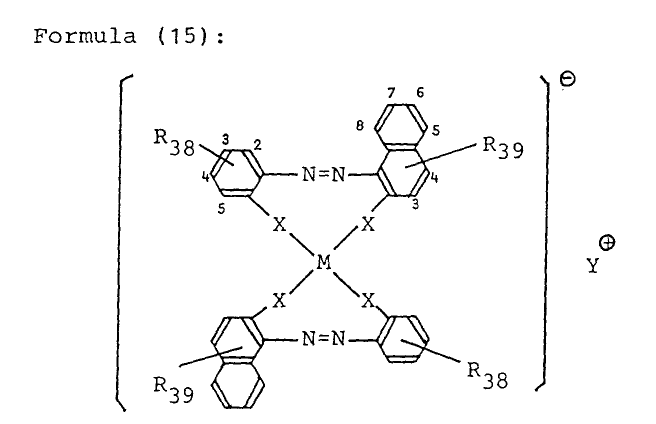 wherein R₃₈ and R₃₉ respectively denote a hydrogen atom, alkyl group, halogen atom or nitro group; X denotes an oxygen atom or sulfur atom; M denotes Ni; and Y ^{⊕} denotes a quarternary ammonium cation. 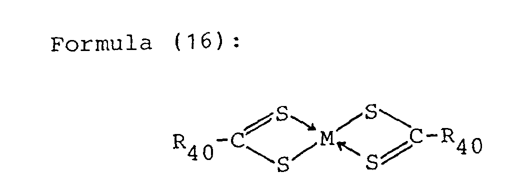 wherein R₄₀ denotes an amino group; and M denotes Cu, Ni, Co or Pd. 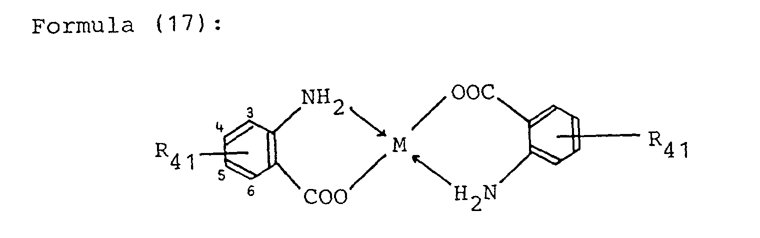 wherein R₄₁ denotes a hydrogen atom, halogen atom, alkyl group, acyl group, nitro group or alkoxyl group; and M denotes Zn, Cu, Ni or Co.

5. A data recording medium according to claim 1, wherein the polymer liquid crystal is selected from the group consisting of: 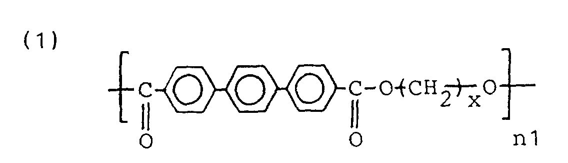 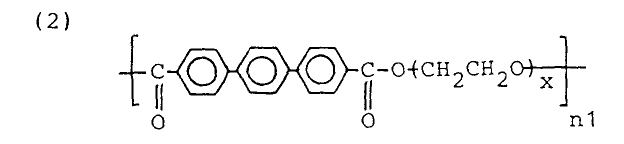 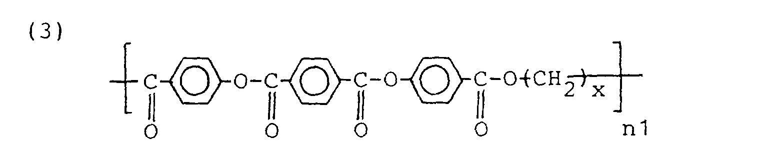 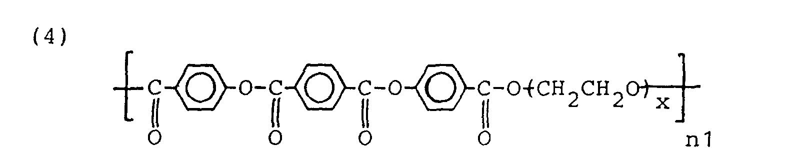 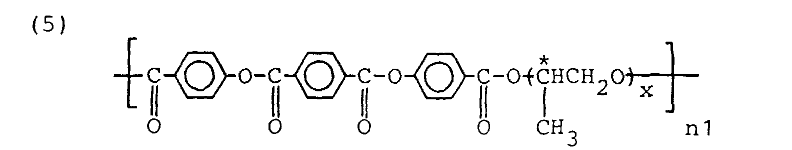 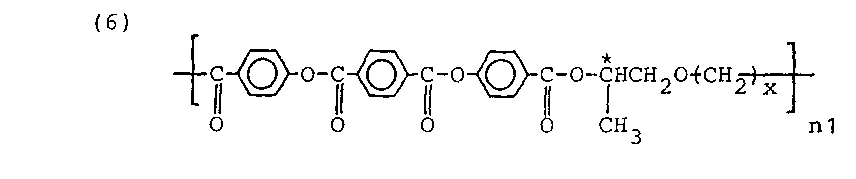 in which formulae (1) - (6), n1 ≥ 5 and x = 1-20 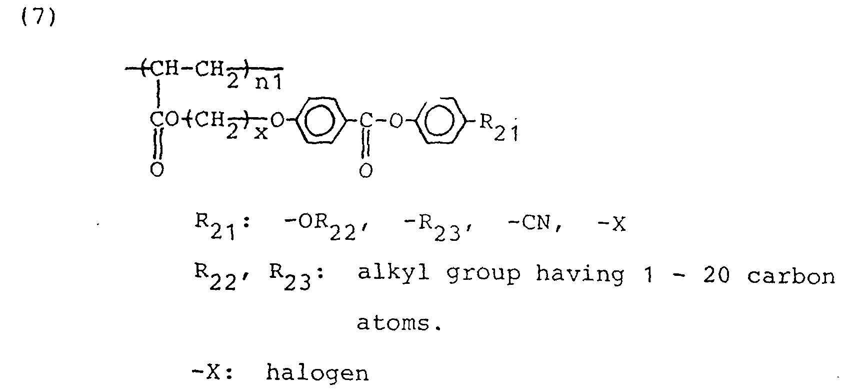 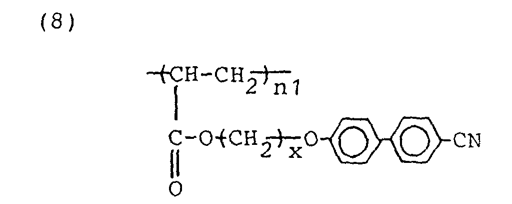 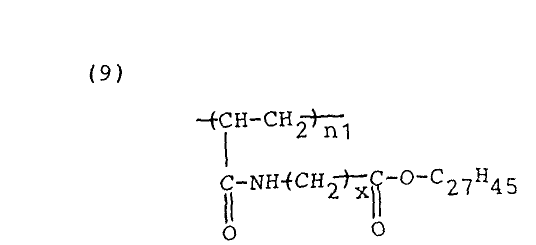 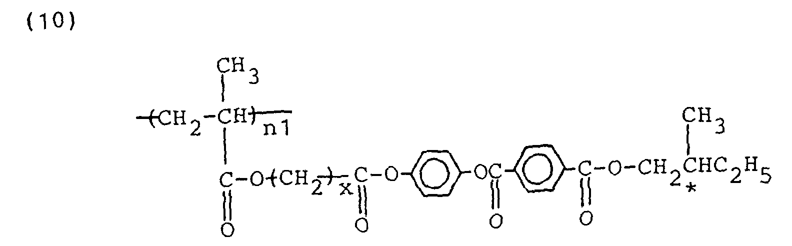 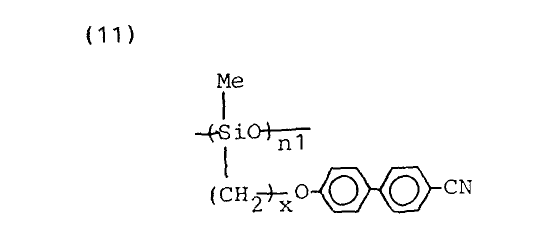 in which formulae (7) - (11), n1 ≥ 5 and x = 1-20 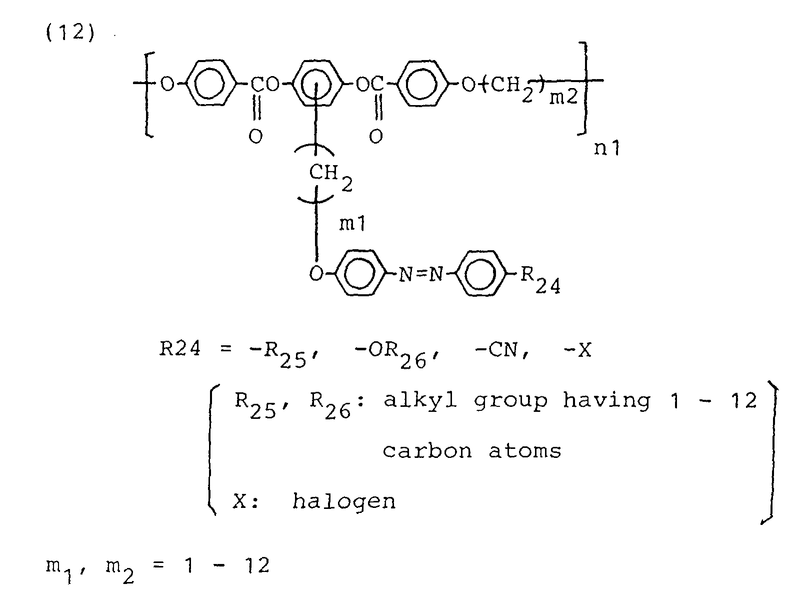 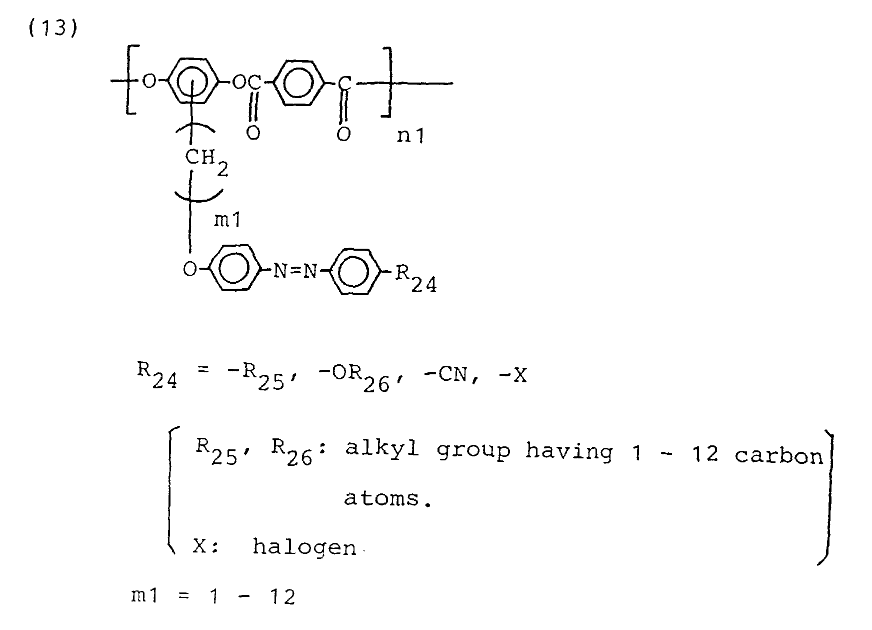 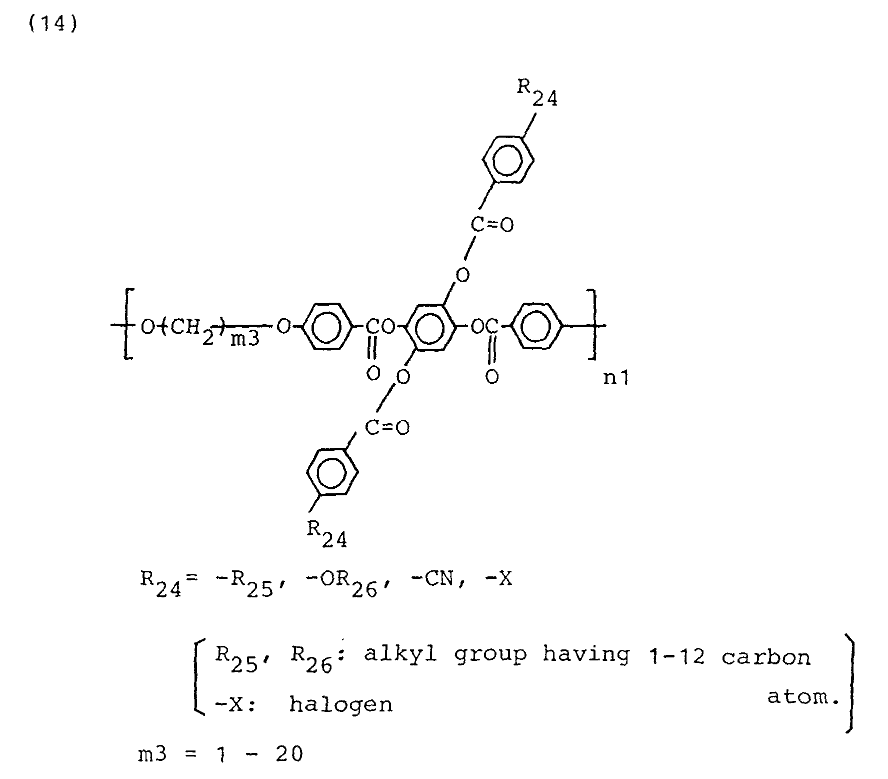 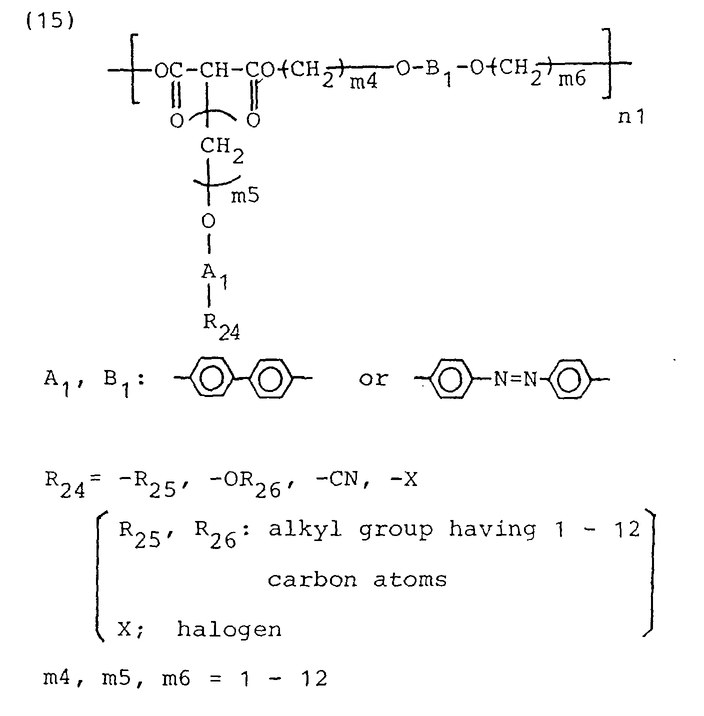 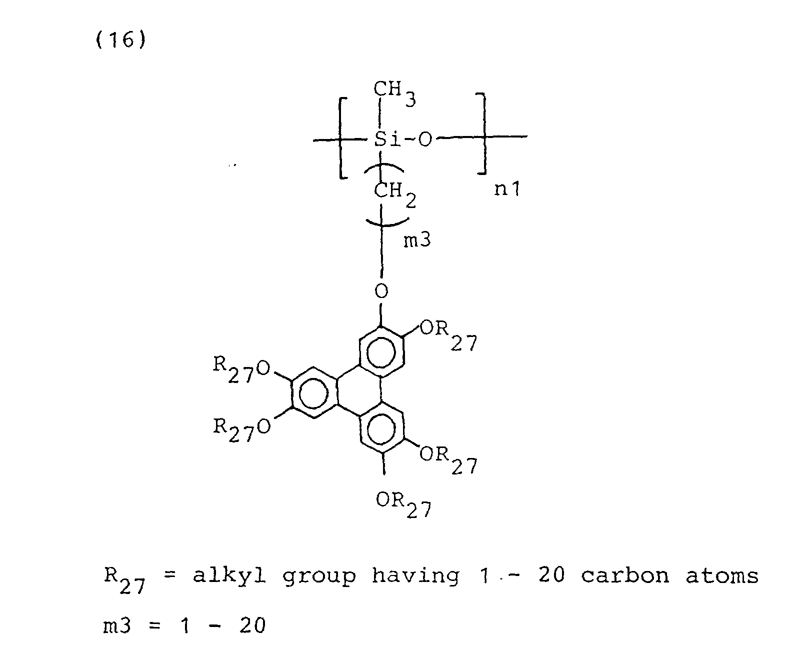 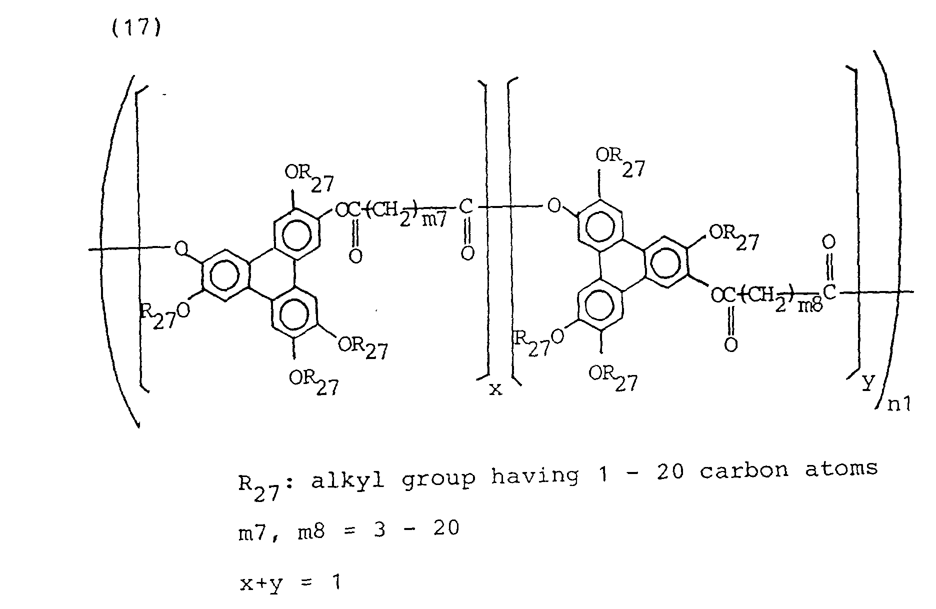 in which formulae (12) - (17), nl ≥ 5

6. A medium according to claim 1, wherein the soluble colorant is used in a proportion of 0.01 - 40 wt.-% of the polymer liquid crystal.

7. A medium according to claim 1, wherein the soluble colorant is used in a proportion of 0.1 - 25 wt.-% of the polymer liquid crystal.

8. A medium according to claim 1, 3 or 5, wherein said polymer liquid crystal is a ferroelectric polymer liquid crystal.

## Patentansprüche

1. Datenaufzeichnungsträger, der eine Aufzeichnungsschicht umfasst, die ihrerseits einen polymeren Flüssigkristall und ein Farbmittel umfasst, das in dem erwähnten polymeren Flüssigkristall löslich ist und ein Naphthalocyanin ist, das zusammmenfassend durch die folgende Formel (I) wiedergegeben wird: 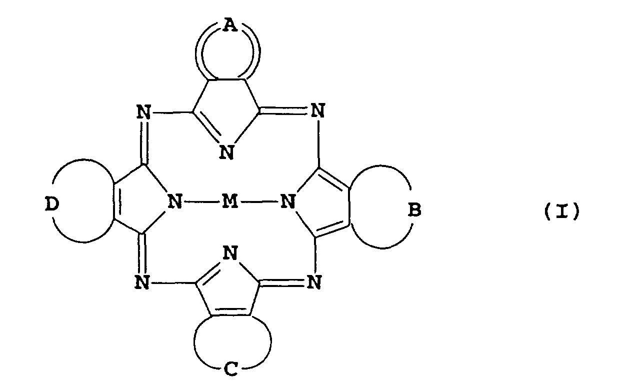 worin die Symbole A, B, C und D jeweils die folgende zweiwertige Gruppe bezeichnen: 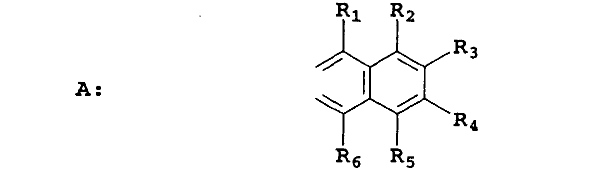 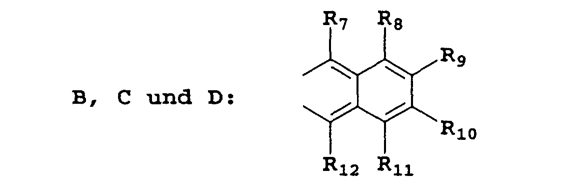 worin R₁ bis R₁₂ jeweils ein Wasserstoffatom, eine lineare oder verzweigte Alkyl-, Alkoxy- oder Alkenylgruppe mit 4 bis 20 Kohlenstoffatomen oder eine Gruppe bezeichnen, die aus den folgenden ausgewählt ist: -SiQ₁Q₂Q₃, -SQ₄, -COQ₅, -COOQ₆ und -NQ₇Q₈, worin Q₁ bis Q₈ jeweils ein Wasserstoffatom oder eine lineare oder verzweigte Alkyl- oder Alkenylgruppe mit 1 bis 20 Kohlenstoffatomen bezeichnen; und M Ge, Sn, ein Übergangsmetall, Al, Ga, In, ein Erdalkalimetall, ein Lanthanoidenelement oder ein Actinoidenelement oder ein Oxid, Halogenid oder Alkoxid davon bezeichnet.

2. Datenaufzeichnungsträger nach Anspruch 1, bei dem das erwähnte Farbmittel ein Naphthalocyanin ist, das durch die folgende Formel (II) wiedergegeben wird: 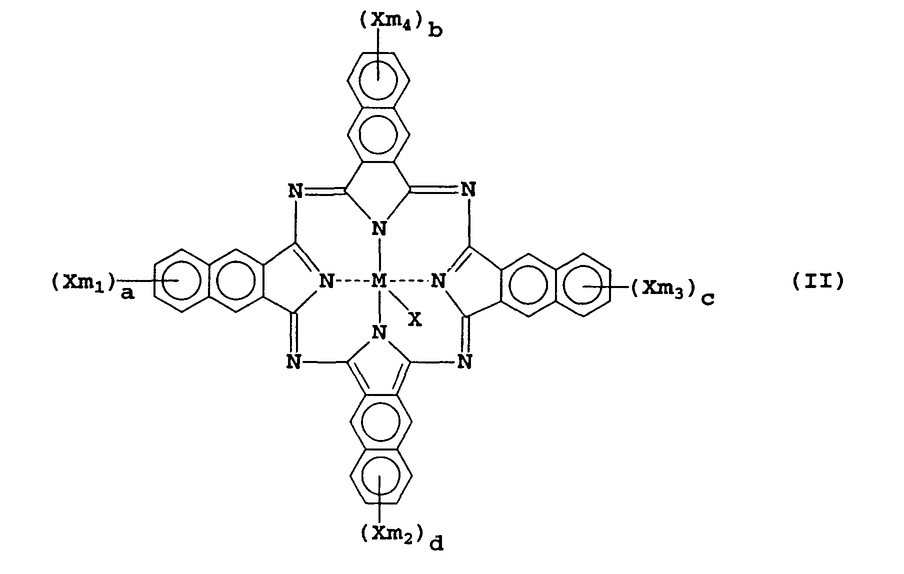 worin M Ge, Sn, ein Übergangsmetall, Al, Ga, In, ein Erdalkalimetall, ein Lanthanoidenelement oder ein Actinoidenelement bezeichnet; X ein Halogenatom, eine Alkylgruppe, eine Carboxylgruppe, eine Alkoxygruppe, eine Ethergruppe oder eine Alkenylgruppe bezeichnet; Xm₁ bis Xm₄ jeweils ein Halogenatom, eine Alkylgruppe, eine Sulfamoylgruppe, eine Ethergruppe oder eine Alkenylgruppe bezeichnen und a bis d jeweils eine Zahl von 0 bis 4 bedeuten und die Beziehung a + b + c + d ≥ 1 erfüllen.

3. Datenaufzeichnungsträger nach Anspruch 1 oder 2, bei dem die Aufzeichnungsschicht ferner ein Metallchelat enthält, das sich von dem Farbmittel gemäß Anspruch 1 oder 2 unterscheidet.

4. Datenaufzeichnungsträger nach Anspruch 3, bei dem die Metallchelatverbindung zu irgendeiner der Gruppen von Metallchelatverbindungen gehört, die durch die folgenden Formeln (1) bis (17) wiedergegeben werden: 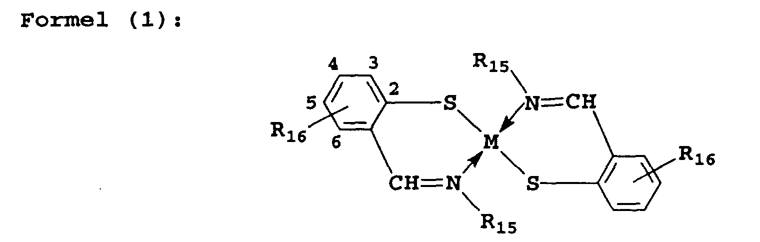 worin R₁₅ ein Wasserstoffatom, eine Hydroxylgruppe oder eine Alkylgruppe, die mit einem anderen R₁₅ verbunden sein kann, bezeichnet; R₁₆ eine Alkylgruppe, ein Halogenatom, ein Wasserstoffatom, eine Nitrogruppe oder eine kondensierte Benzogruppe bezeichnet und M ein Zentralatom, und zwar Cu, Ni, Co oder Pd, bezeichnet; 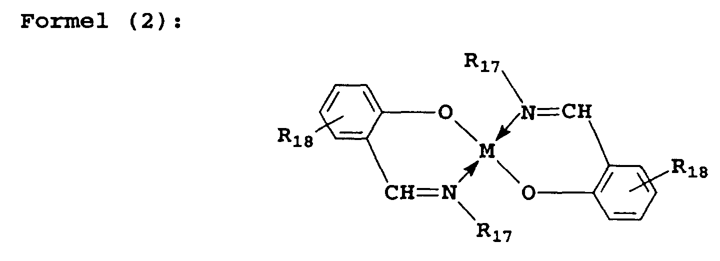 worin R₁₇ ein Wasserstoffatom, eine Hydroxylgruppe, eine Alkylgruppe oder eine Arylgruppe, die mit einem anderen R₁₇ verbunden sein kann, bezeichnet; R₁₈ ein Halogenatom, eine Alkylgruppe, eine Nitrogruppe oder eine kondensierte Benzogruppe bezeichnet und M Cu, Ni, Co oder Pd bezeichnet; 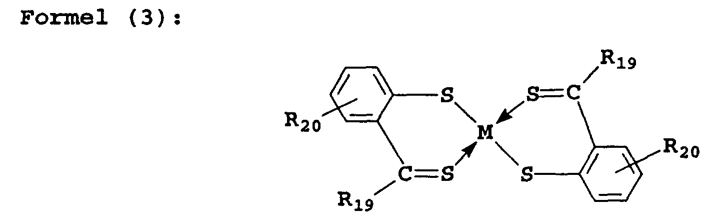 worin R₁₉ eine Alkylgruppe oder eine Arylgruppe bezeichnet; R₂₀ ein Wasserstoffatom, ein Halogenatom, eine Alkylgruppe, eine Arylgruppe, eine Nitrogruppe oder eine kondensierte Benzogruppe bezeichnet und M Cu, Ni oder Pd bezeichnet; 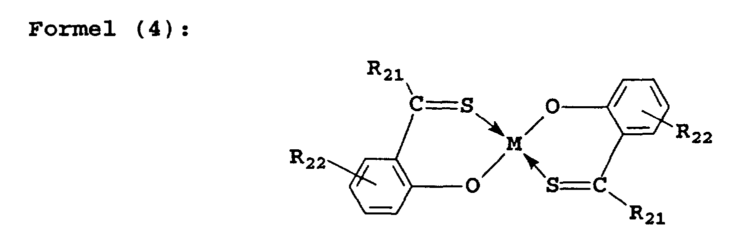 worin R₂₁ eine Alkylgruppe oder eine Arylgruppe bezeichnet; R₂₂ ein Wasserstoffatom, ein Halogenatom, eine Alkylgruppe oder eine kondensierte Benzogruppe bezeichnet und M Cu, Ni oder Pd bezeichnet; 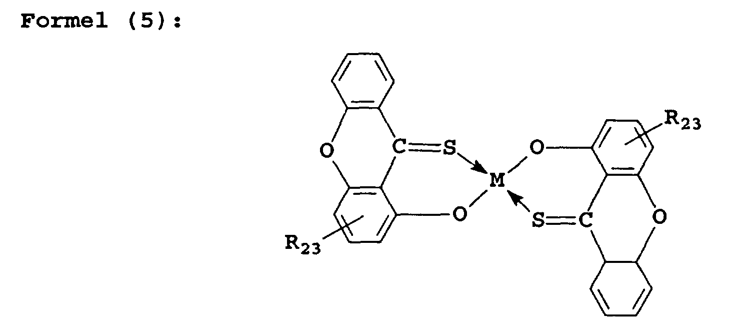 worin R₂₃ ein Wasserstoffatom oder eine Alkylgruppe bezeichnet und M Cu oder Ni bezeichnet; 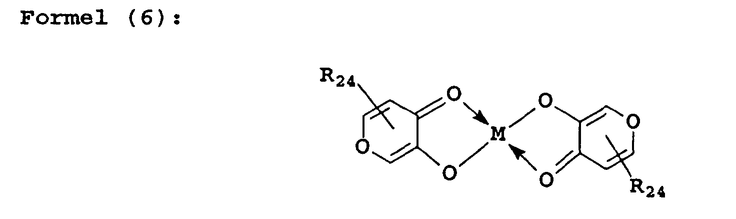 worin R₂₄ ein Wasserstoffatom oder eine Alkylgruppe bezeichnet und M Cu, Ni, Co oder Mn bezeichnet; 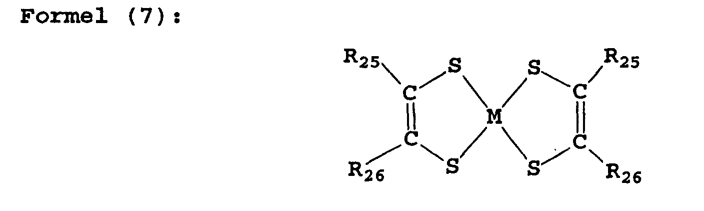 worin R₂₅ und R₂₆ jeweils eine substituierte oder nichtsubstituierte Alkylgruppe, Acylgruppe oder Arylgruppe bezeichnen und R₂₅ und R₂₆ in Kombination einen aromatischen Ring bilden können und M Cu, Ni, Co oder Pd bezeichnet, das eine Ladung und ein Gegenion haben kann; 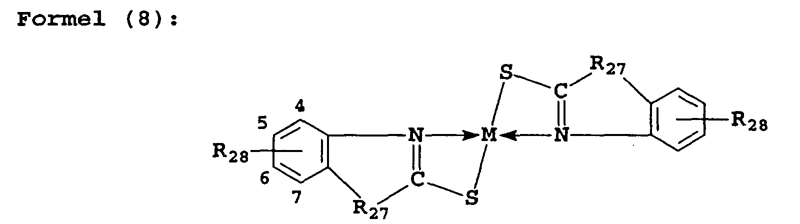 worin R₂₇ ein Schwefelatom, eine substituierte oder nichtsubstituierte Aminogruppe, ein Sauerstoffatom oder eine Thioketongruppe bezeichnet; R₂₈ ein Wasserstoffatom, eine Alkylgruppe, ein Halogenatom oder eine Aminogruppe bezeichnet und M Zn, Cu oder Ni bezeichnet; 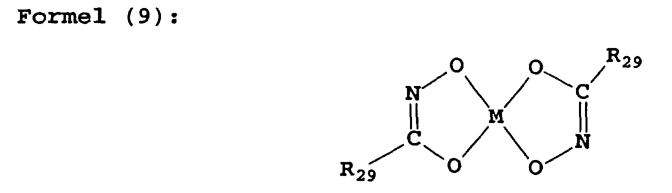 worin R₂₉ eine Alkylgruppe, eine Arylgruppe oder eine Styrylgruppe bezeichnet und M Cu, Ni oder Co bezeichnet; 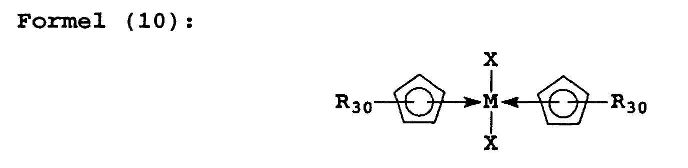 worin R₃₀ ein Wasserstoffatom, ein Halogenatom, eine Alkylgruppe, eine Acylgruppe oder eine Arylgruppe bezeichnet; X wahlweise ist und Cl bezeichnen kann und M Ni oder Zr bezeichnet; 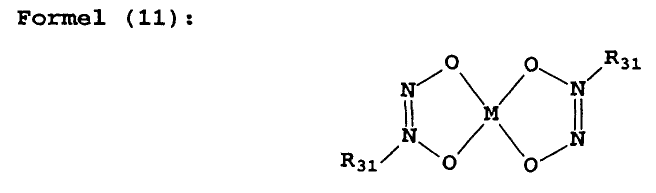 worin R₃₁ eine Alkylgruppe oder eine Arylgruppe bezeichnet und M Cu, Ni oder Co bezeichnet; 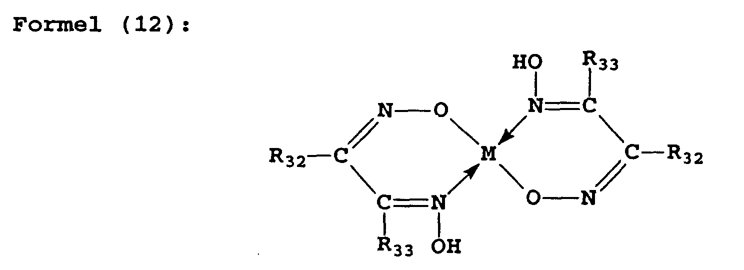 worin R₃₂ und R₃₃ jeweils eine Alkylgruppe oder eine Arylgruppe bezeichnen und M Ni bezeichnet; 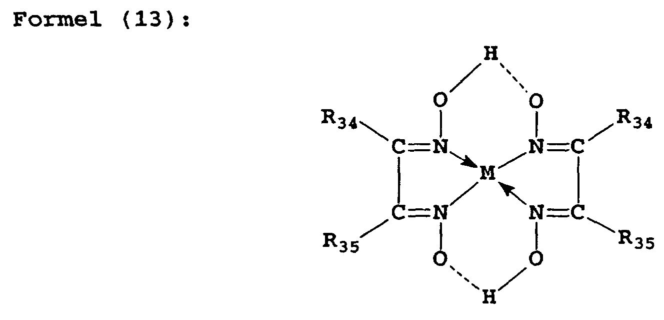 worin R₃₄ und R₃₅ jeweils eine Alkylgruppe, eine Aminogruppe, eine Arylgruppe oder eine Furangruppe bezeichnen, die in Kombination miteinander einen alicyclischen Ring bilden können; und M Ni bezeichnet; 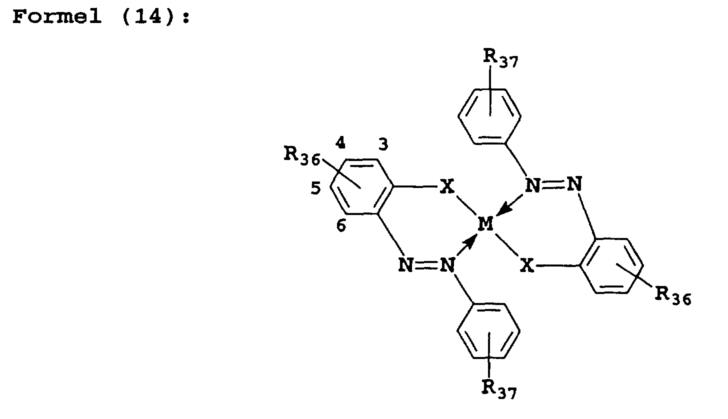 worin R₃₆ und R₃₇ ein Wasserstoffatom, ein Halogenatom oder eine Alkylgruppe bezeichnen; X ein Sauerstoffatom oder ein Schwefelatom bezeichnet und M Ni bezeichnet; 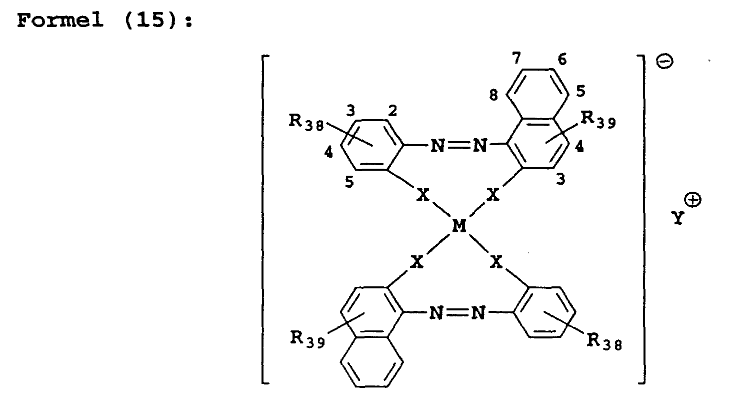 worin R₃₈ und R₃₉ jeweils ein Wasserstoffatom, eine Alkylgruppe, ein Halogenatom oder eine Nitrogruppe bezeichnen; X ein Sauerstoffatom oder ein Schwefelatom bezeichnet; M Ni bezeichnet und Y^{⊕} ein quartäres Ammoniumkation bezeichnet; 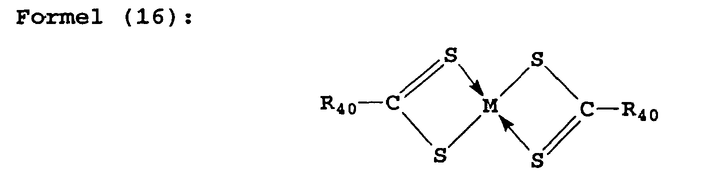 worin R₄₀ eine Aminogruppe bezeichnet und M Cu, Ni, Co oder Pd bezeichnet; 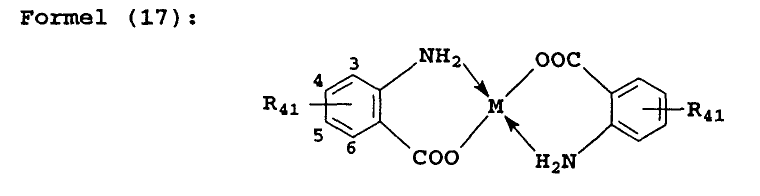 worin R₄₁ ein Waserstoffatom, ein Halogenatom, eine Alkylgruppe, eine Acylgruppe, eine Nitrogruppe oder eine Alkoxygruppe bezeichnet und M Zn, Cu, Ni oder Co bezeichnet.

5. Datenaufzeichnungsträger nach Anspruch 1, bei dem der polymere Flüssigkristall aus der Gruppe ausgewählt ist, die aus folgenden besteht: 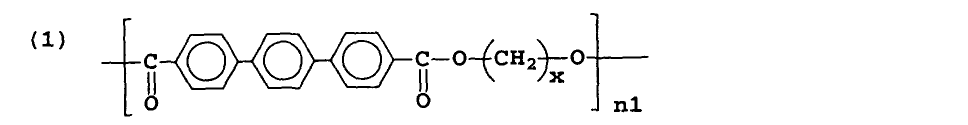 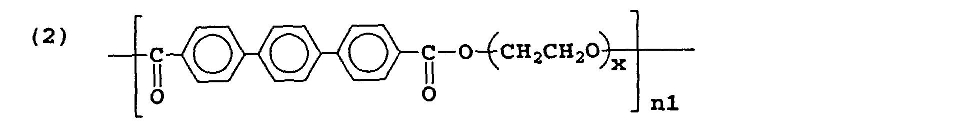 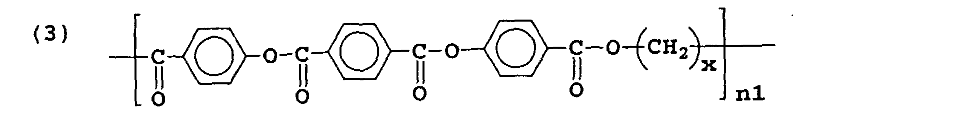 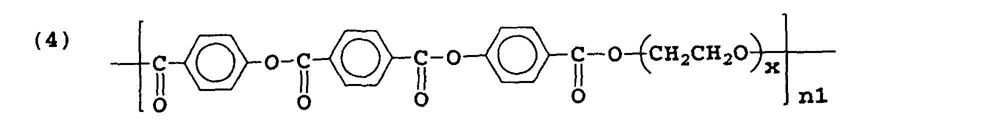 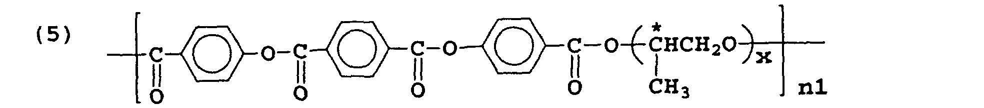 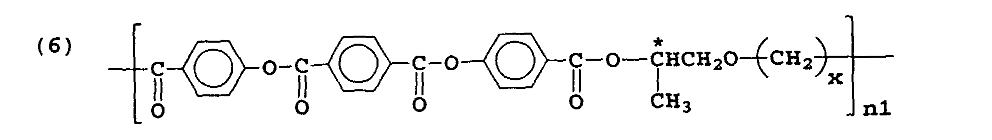 wobei in diesen Formeln (1) bis (6) n1 ≥ 5 und x = 1 bis 20; 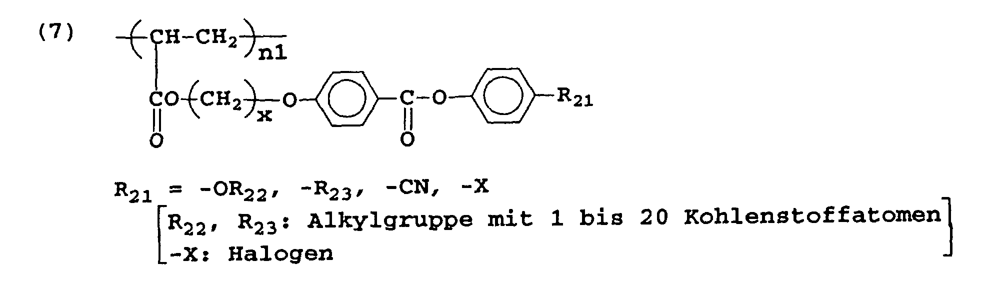 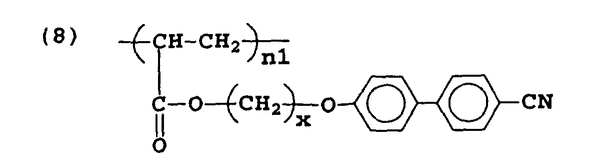 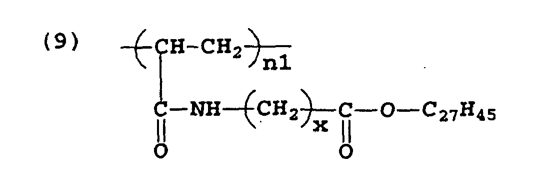 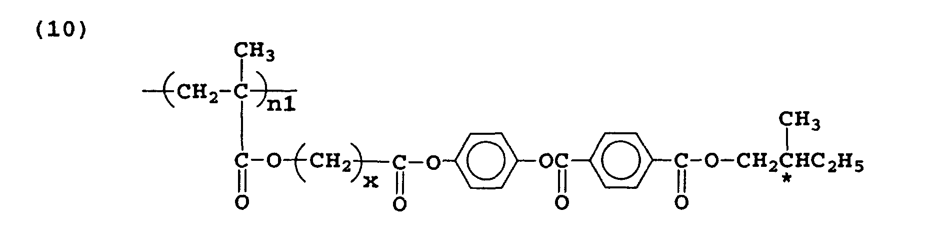 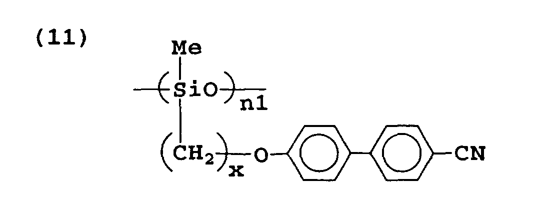 wobei in diesen Formeln (7) bis (11) nl ≥ 5 und x = 1 bis 20; 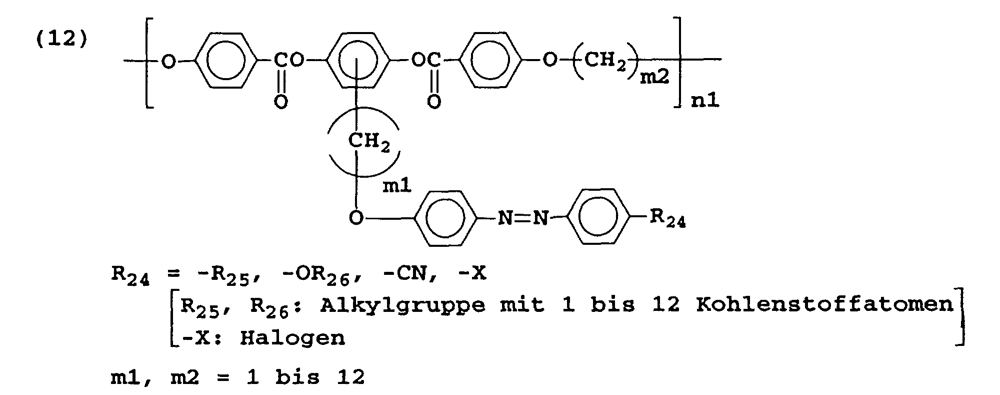 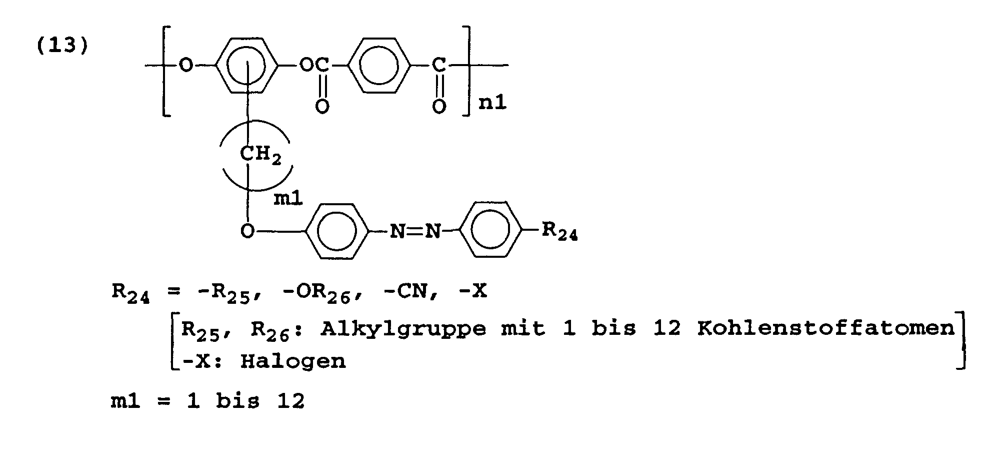 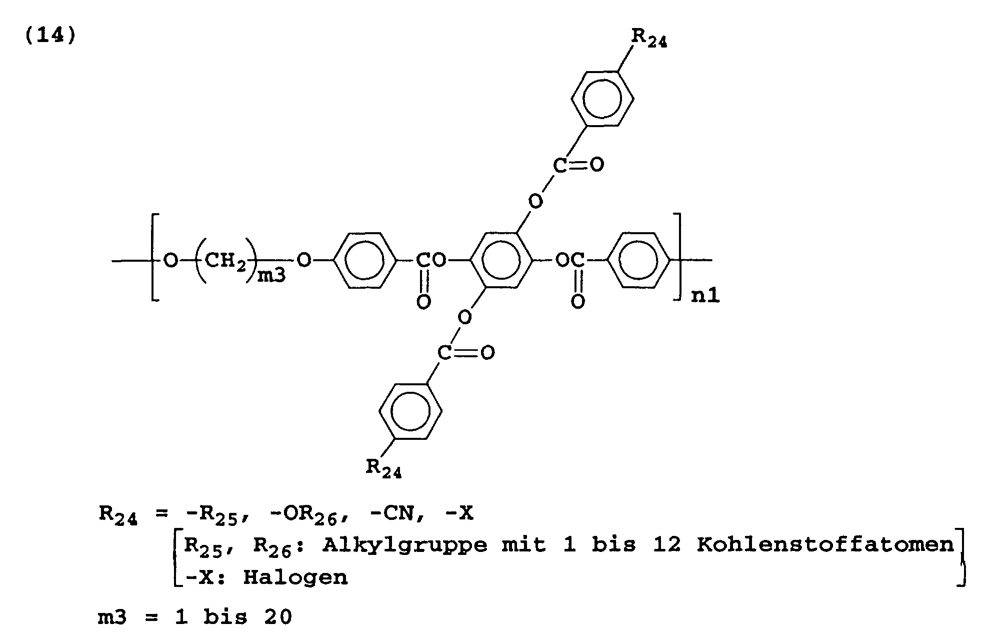 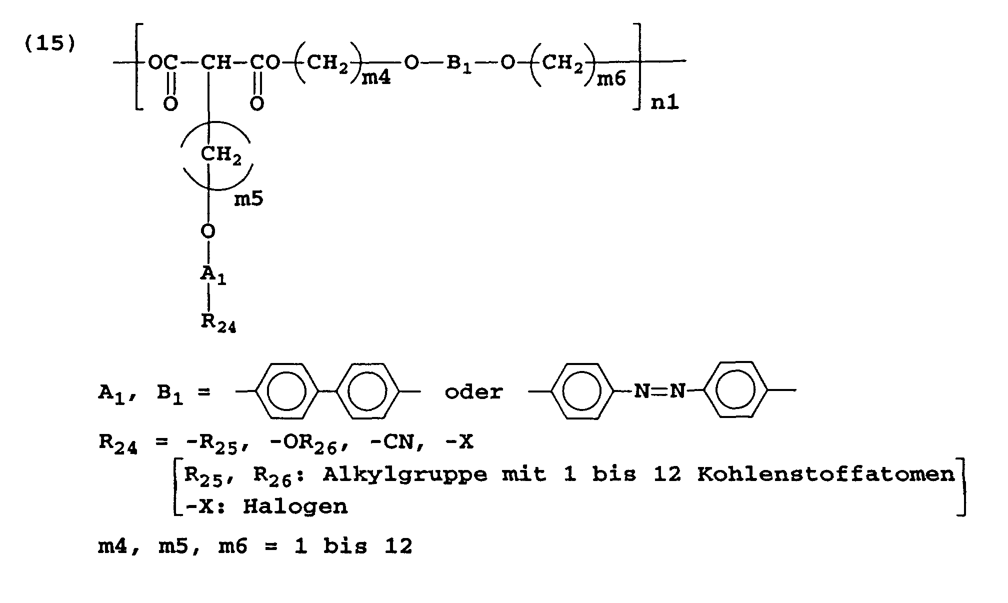 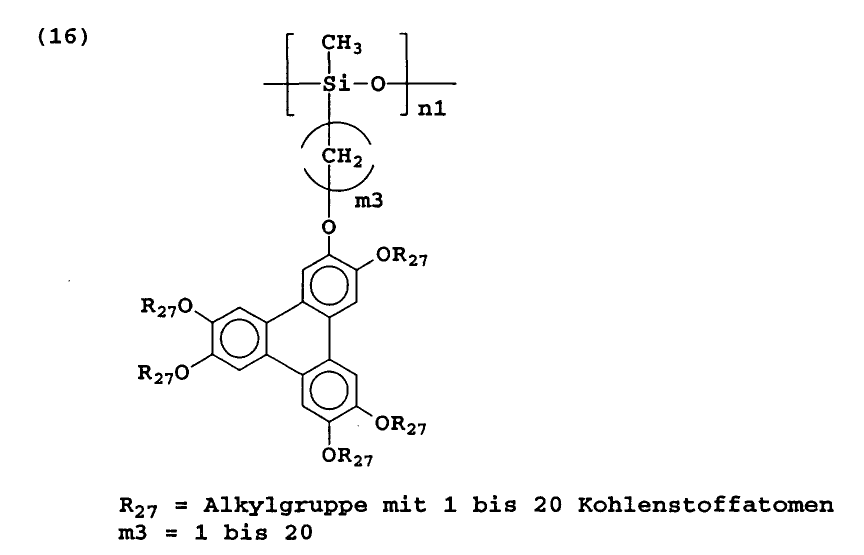 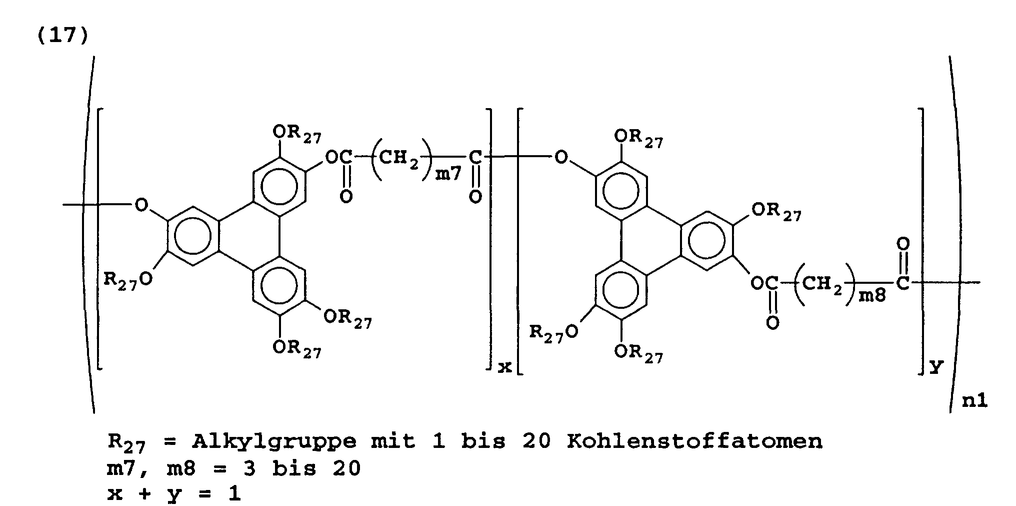 wobei in diesen Formeln (12) bis (17) nl ≥ 5.

6. Datenaufzeichnungsträger nach Anspruch 1, bei dem das lösliche Farbmittel in einem Anteil von 0,01 bis 40 Masse% des polymeren Flüssigkristalls verwendet wird.

7. Datenaufzeichnungsträger nach Anspruch 1, bei dem das lösliche Farbmittel in einem Anteil von 0,1 bis 25 Masse% des polymeren Flüssigkristalls verwendet wird.

8. Datenaufzeichnungsträger nach Anspruch 1, 3 oder 5, bei dem der erwähnte polymere Flüssigkristall ein ferroelektrischer polymerer Flüssigkristall ist.

## Revendications

1. Support d'enregistrement de données, comprenant une couche d'enregistrement qui comprend elle-même un cristal liquide polymère et une matière colorante soluble dans ledit cristal liquide polymère, et consistant en une naphtalocyanine qui est représentée inclusivement par la formule (I) suivante : 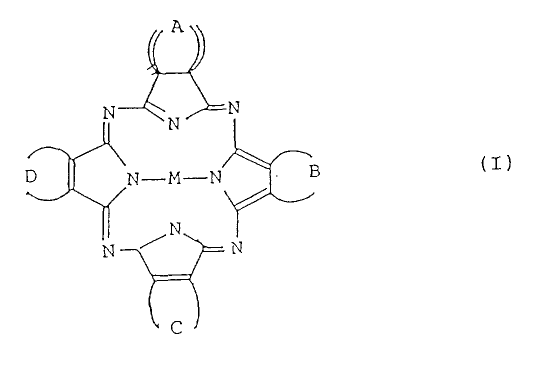 dans laquelle les symboles A, B, C et D représentent respectivement les groupes divalents suivants : 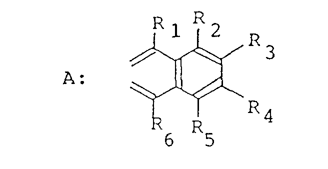 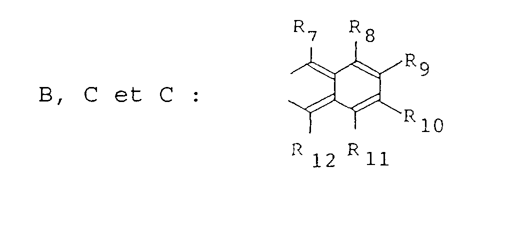 dans lesquels R¹ à R¹² représentent respectivement un atome d'hydrogène, un groupe alkyle, alkoxy ou alcényle linéaire ou ramifié ayant 4 à 20 atomes de carbone, ou un groupe choisi parmi les suivants : -SiQ₁Q₂Q₃₃, -SQ₄, -COQ₅, COOQ₆, et -NQ₇Q₈, dans lesquels Q₁ à Q₈ représentent respectivement un atome d'hydrogène, ou un groupe alkyle ou alcényle linéaire ou ramifié ayant 1 à 20 atomes de carbone ;
M représente Ge, Sn, un métal de transition, Al, Ga, In, un métal alcalino-terreux, un élément faisant partie des lanthanides ou un élément faisant partie des actinides, ou un de leurs oxydes, halogénures ou alcoolates.

2. Support suivant la revendication 1, dans lequel la matière colorante est une naphtalocyanine représentée par la formule (II) suivante : 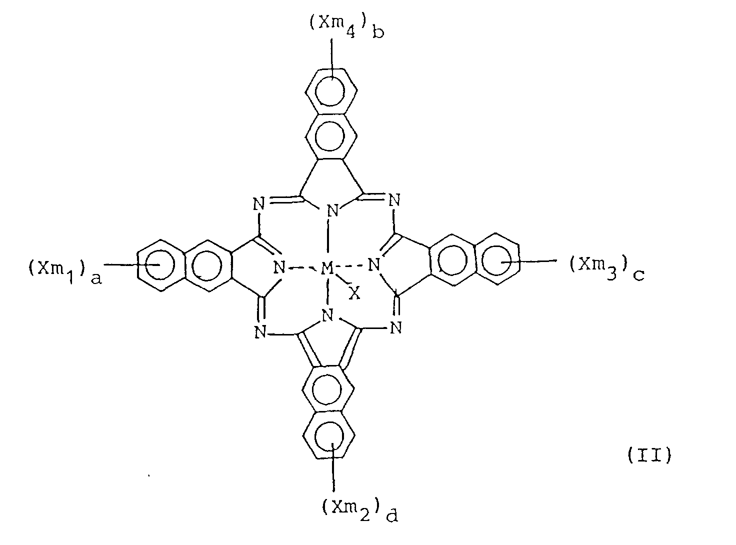
dans laquelle M représente Ge, Sn, un métal de transition, Al, Ga, In, un métal alcalino-terreux, un élément faisant partie des lanthanides ou un élément faisant partie des actinides ; X représente un atome d'halogène, un groupe alkyle, un groupe carboxyle, un groupe alkoxy, un groupe éther ou un groupe alcényle ;
Xm₁ à Xm₄ représentent respectivement un atome d'halogène, un groupe alkyle, un groupe sulfamoyle, un groupe éther ou un groupe alcényle ; a à d représentent respectivement un nombre de 0 à 4, satisfaisant la relation a + b + c + d ≥ 1.

3. Support suivant la revendication 1 ou 2, dans lequel la couche d'enregistrement comprend en outre un chélate métallique différent de la matière colorante suivant la revendication 1 ou 2.

4. Support suivant la revendication 3, dans lequel le chélate métallique appartient à n'importe laquelle des catégories de chélates métalliques représentés par les formules (1) à (17) suivantes : 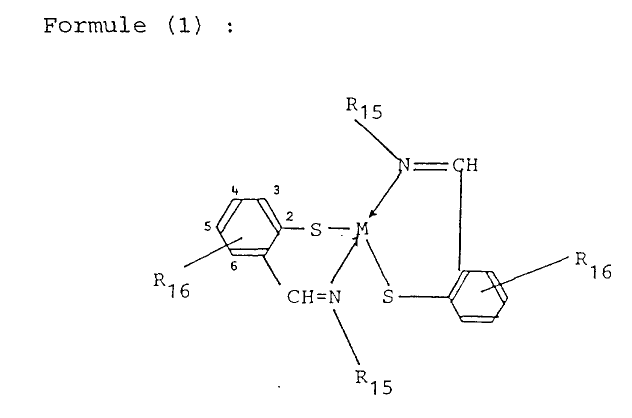 dans laquelle R₁₅ représente un atome d'hydrogène, un groupe hydroxyle ou un groupe alkyle pouvant être connecté à un autre groupe R₁₅ ; R₁₆ représente un groupe alkyle, un atome d'halogène, un atome d'hydrogène, un groupe nitro ou un groupe benzo condensé ; et M représente un métal central consistant en Cu, Ni, Co ou Pd ; 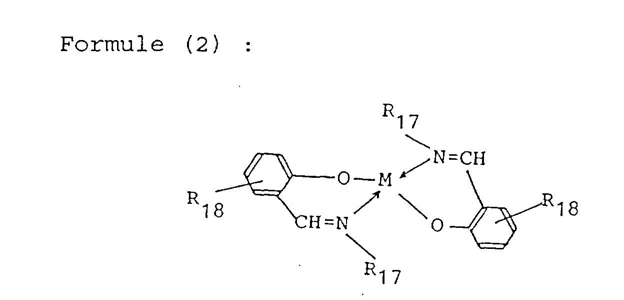 dans laquelle R₁₇ représente un atome d'hydrogène, un groupe hydroxyle, un groupe alkyle ou un groupe aryle pouvant être connecté à un autre groupe R₁₇ ; R₁₈ représente un atome d'halogène, un groupe alkyle, un groupe nitro ou un groupe benzo condensé ; et M représente Cu, Ni, Co, ou Pd ; 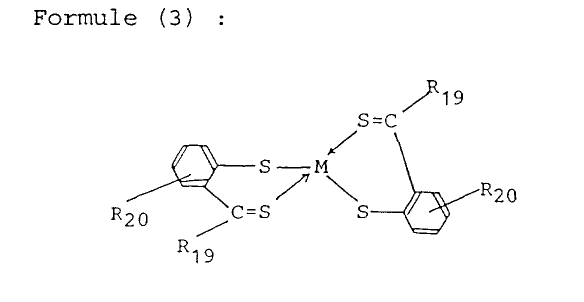 dans laquelle R₁₉ représente un groupe alkyle ou un groupe aryle ; R₂₀ représente un atome d'hydrogène, un atome d'halogène, un groupe alkyle, un groupe aryle, un groupe nitro ou un groupe benzo condensé ; et M représente Cu, Ni ou Pd ; 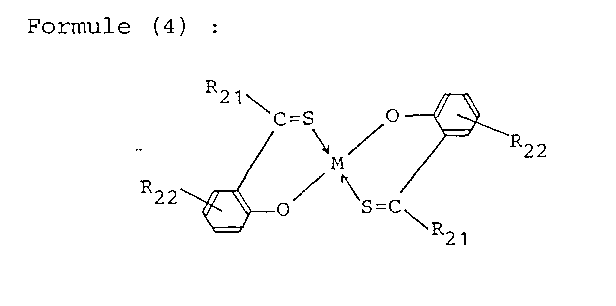 dans laquelle R₂₁ représente un groupe alkyle ou un groupe aryle ; R₂₂ représente un atome d'hydrogène, un atome d'halogène, un groupe alkyle ou un groupe benzo condensé ; et M représente Cu, Ni ou Pd ; 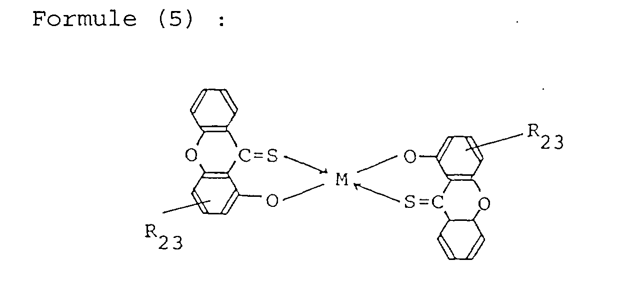 dans laquelle R₂₃ représente un atome d'hydrogène ou un groupe alkyle ; et M représente Cu ou Ni ; 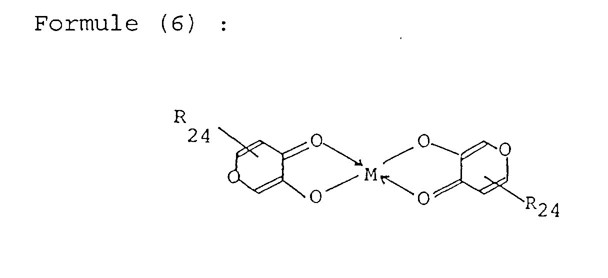 dans laquelle R₂₄ représente un atome d'hydrogène ou un groupe alkyle ; et M représente Cu, Ni, Co ou Mn ; 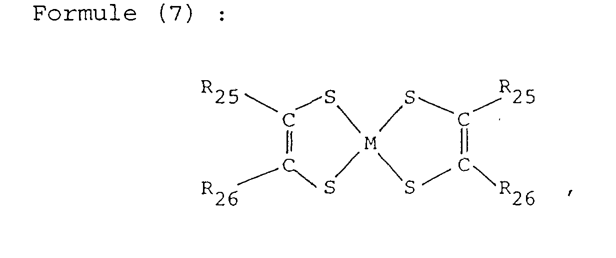 dans laquelle R₂₅ et R₂₆ représentent respectivement un groupe alkyle substitué ou non substitué, un groupe acyle ou un groupe aryle, et R₂₅ et R₂₆ sont capables de former un noyau aromatique en association ; M représente Cu, Ni, Co ou Pd, qui peut porter une charge et un ion complémentaire ; 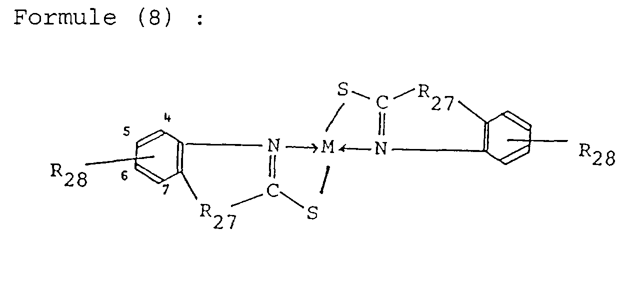 dans laquelle R₂₇ représente un atome de soufre, un groupe amino substitué ou non substitué, un atome d'oxygène ou un groupe thiocétone ; R₂₈ représente un atome d'hydrogène, un groupe alkyle, un atome d'halogène ou un groupe amino ; et M représente Zn, Cu ou Ni ; 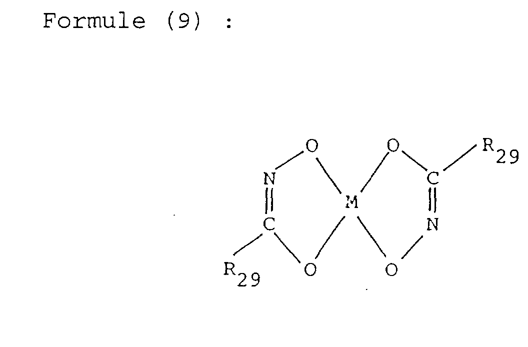 dans laquelle R₂₉ représente un groupe alkyle, un groupe aryle ou un groupe styryle ; et M représente Cu, Ni ou Co ; 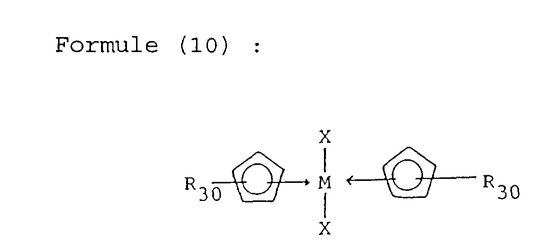 dans laquelle R₃₀ représente un atome d'hydrogène, un atome d'halogène, un groupe alkyle, un groupe acyle ou un groupe aryle ; X est facultatif et peut représenter Cl, et M représente Ni ou Zr ; 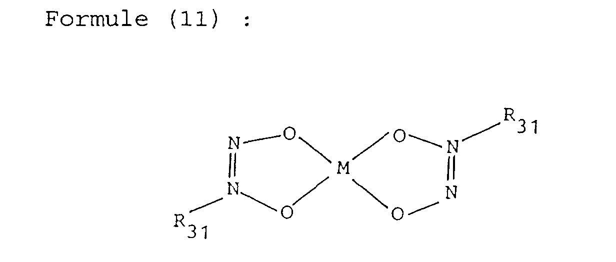 dans laquelle R₃₁ représente un groupe alkyle ou un groupe aryle ; et M représente Cu, Ni ou Co ; 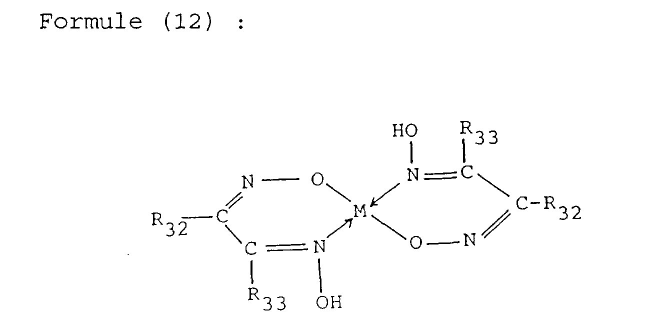 dans laquelle R₃₂ et R₃₃ représentent respectivement un groupe alkyle ou un groupe aryle ; et M représente Ni ; 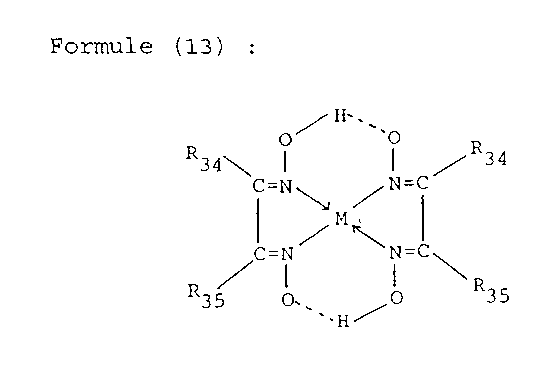 dans laquelle R₃₄ et R₃₅ représentent respectivement un groupe alkyle, un groupe amino, un groupe aryle ou un groupe furanne, ces groupes étant capables de former un noyau alicyclique en association l'un avec l'autre ; et M représente Ni ; 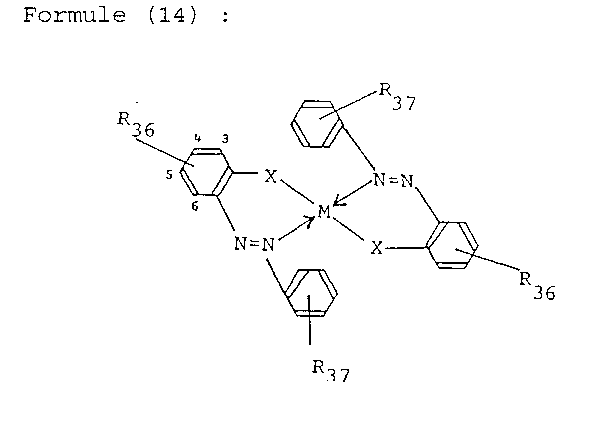 dans laquelle R₃₆ et R₃₇ représentent un atome d'hydrogène, un atome d'halogène ou un groupe alkyle ; X représente un atome d'oxygène ou un atome de soufre ; et M représente Ni ; 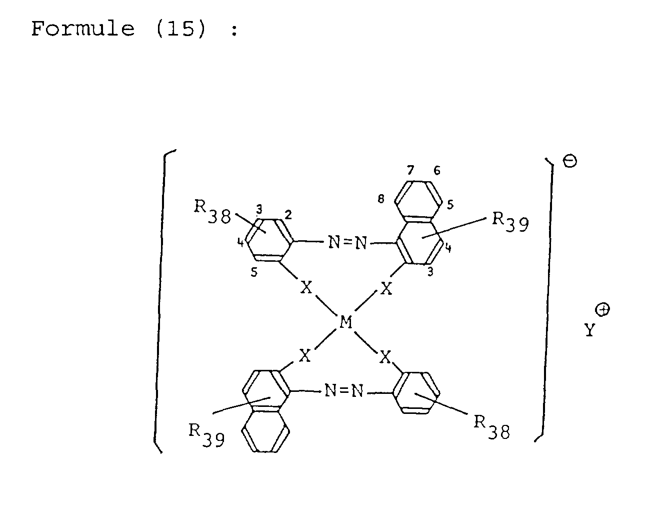 dans laquelle R₃₈ et R₃₉ représentent respectivement un atome d'hydrogène, un groupe alkyle, un atome d'halogène ou un groupe nitro ; X représente un atome d'oxygène ou un atome de soufre ; M représente Ni ; et Y ^{⊕} représente un cation ammonium quaternaire ; 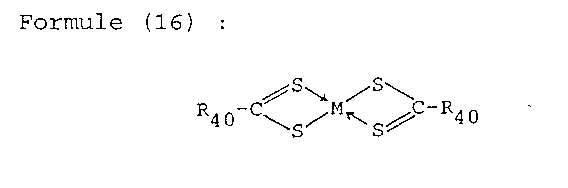 dans laquelle R₄₀ représente un groupe amino ; et M représente Cu, Ni, Co ou Pd ; 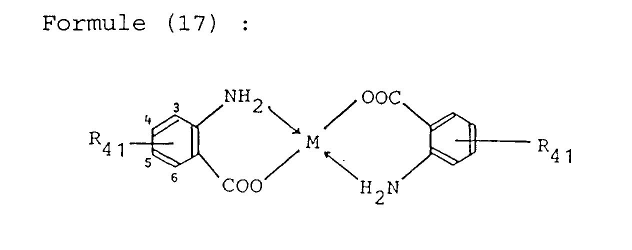 dans laquelle R₄₁ représente un atome d'hydrogène, un atome d'halogène, un groupe alkyle, un groupe acyle, un groupe nitro ou un groupe alkoxyle ; et M représente Z, Cu, Ni ou Co.

5. Support d'enregistrement de données suivant la revendication 1, dans lequel le cristal liquide polymère est choisi dans le groupe consistant en : 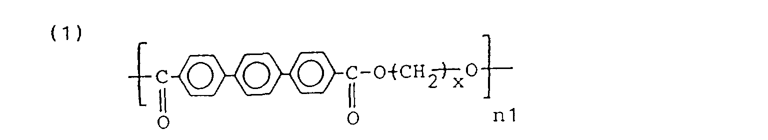 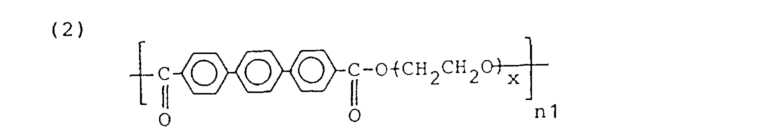 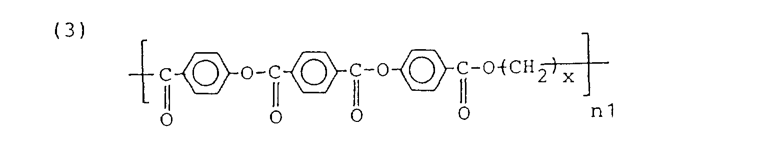 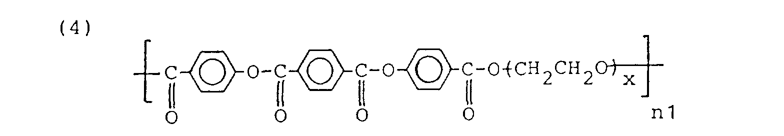 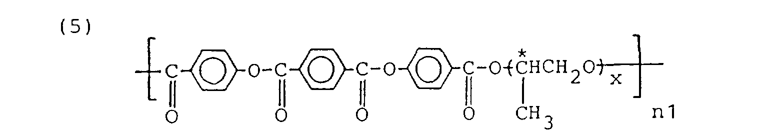 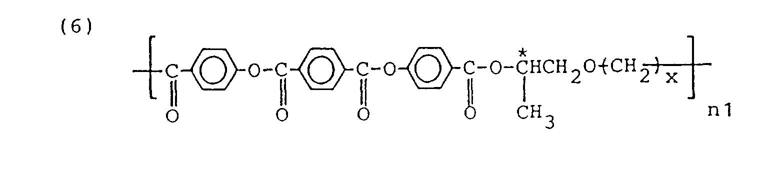 formules (1) à (6) dans lesquelles nl ≥ 5 et x a une valeur de 1 à 20. 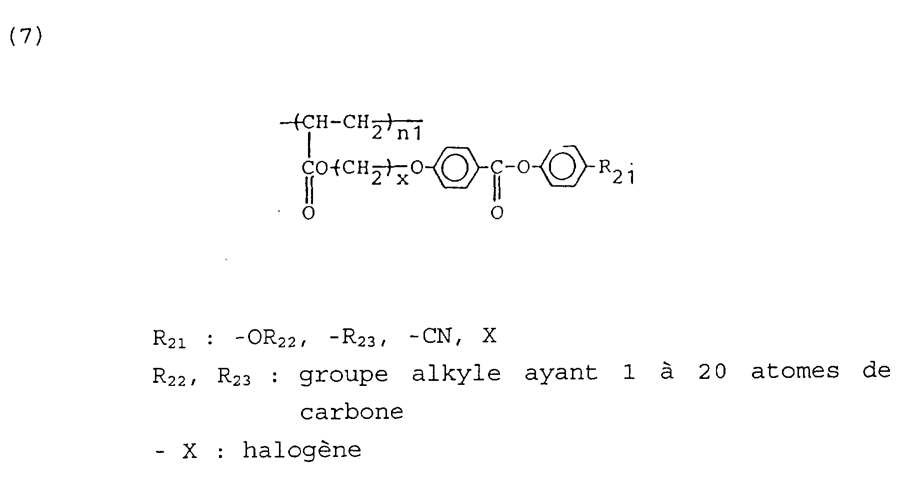 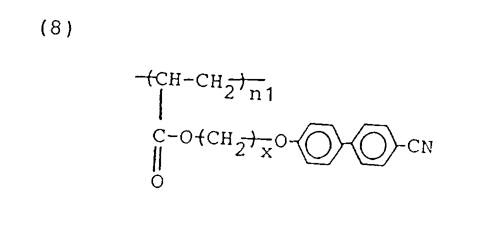 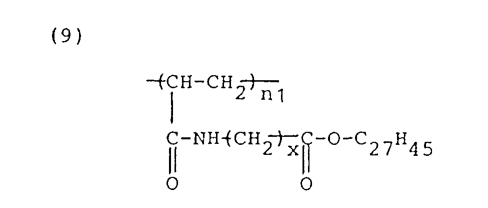 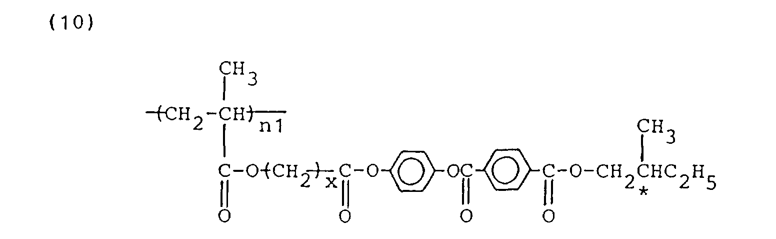 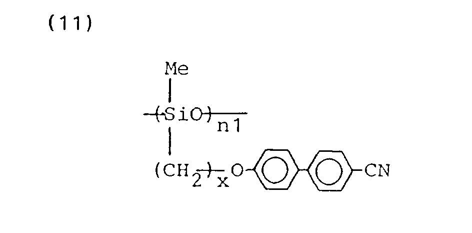 formules (7) à (11) dans lesquelles n1 ≥ 5 et x a une valeur de 1 à 20. 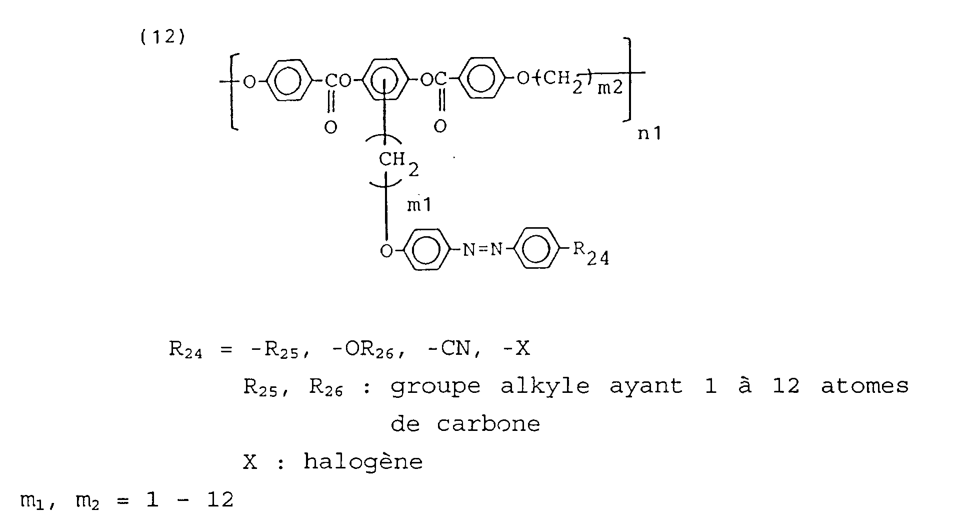 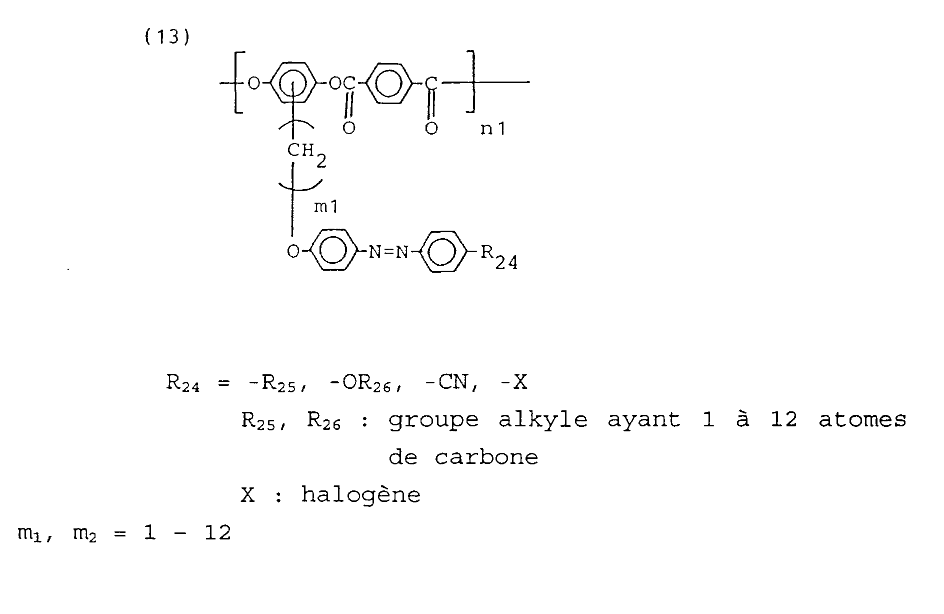 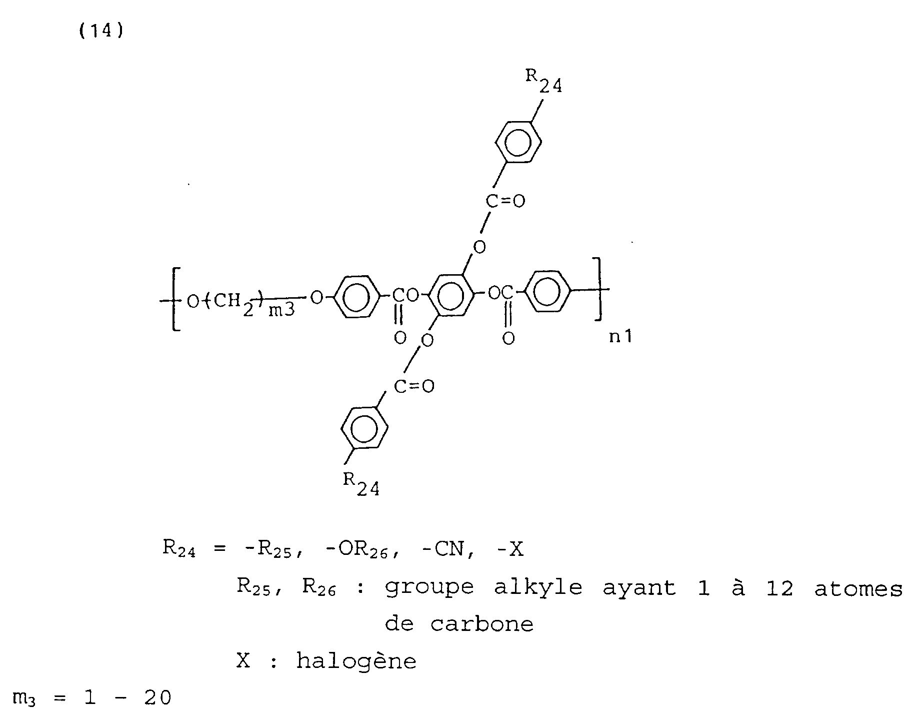 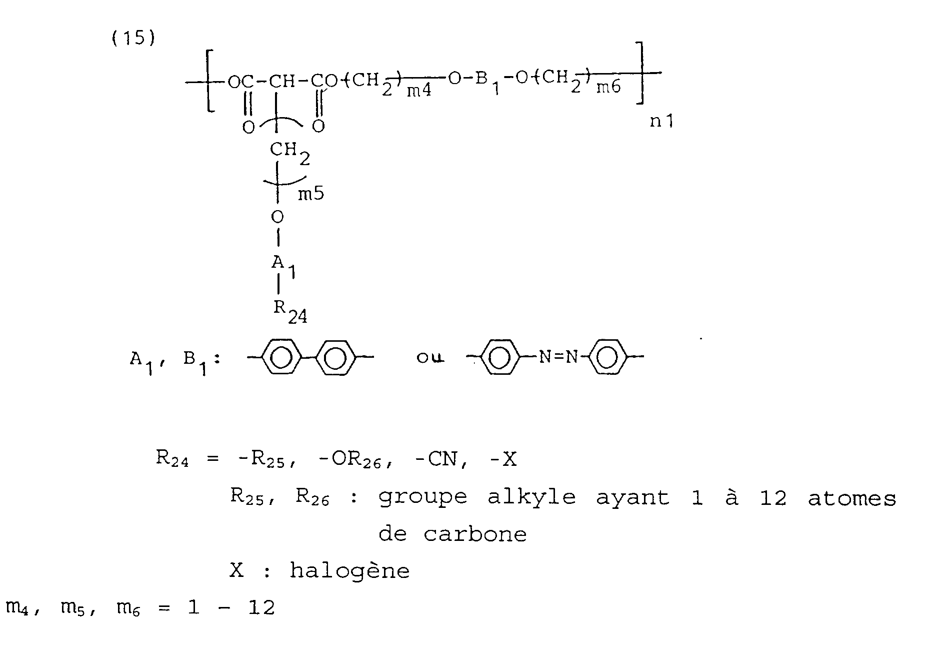 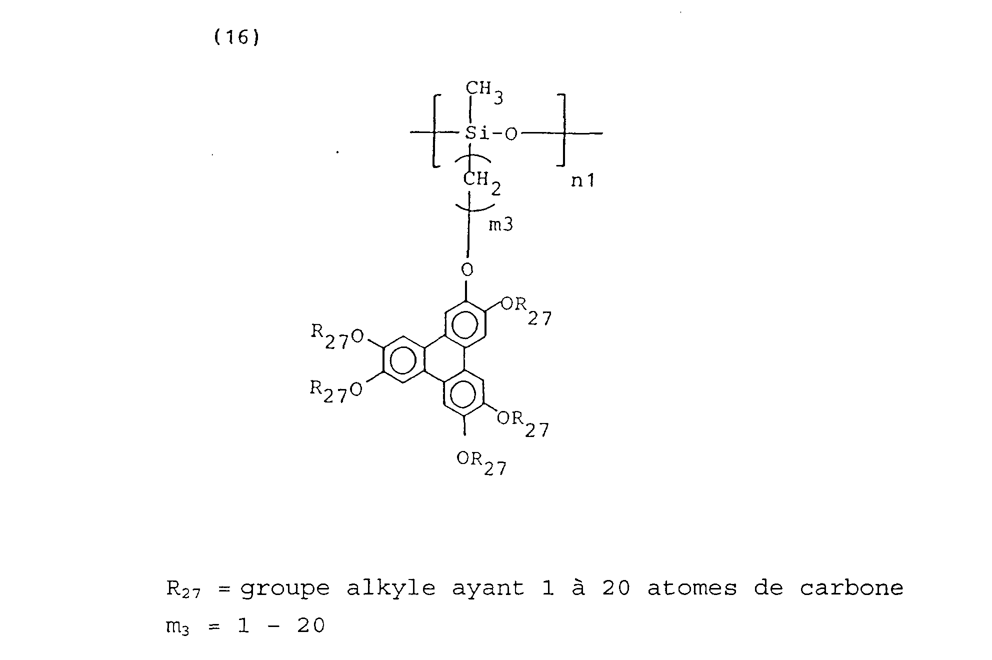 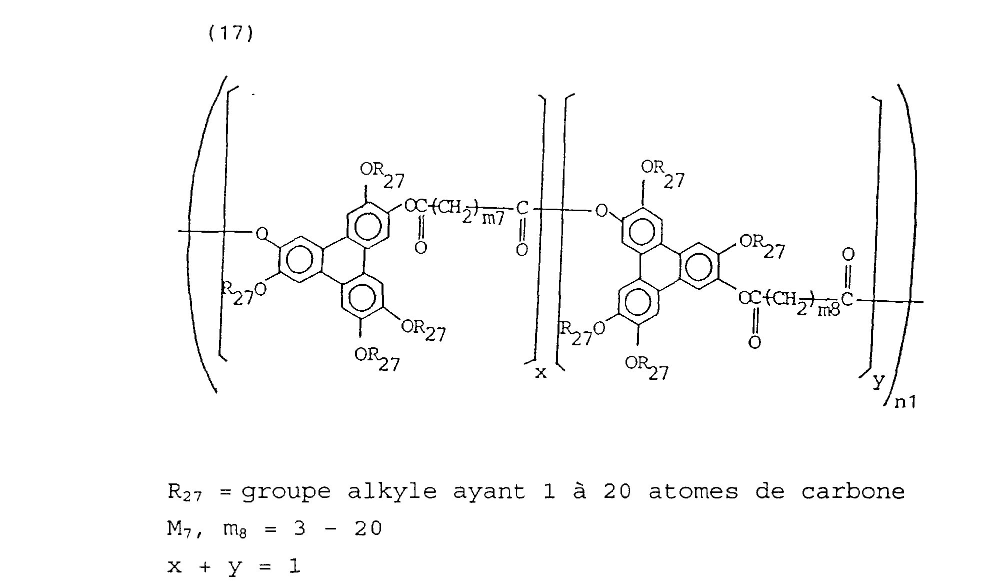 formules (12) à (17) dans lesquelles n1 ≥ 5

6. Support suivant la revendication 1, dans lequel la matière colorante soluble est utilisée en une proportion de 0,01 à 40 % en poids du cristal liquide polymère.

7. Support suivant la revendication 1, dans lequel la matière colorante soluble est utilisée en une proportion de 0,1 à 25 % en poids du cristal liquide polymère.

8. Support suivant la revendication 1, 3 ou 5, dans lequel le cristal liquide polymère est un cristal liquide polymère ferroélectrique.
